# EUROPÄISCHE PATENTSCHRIFT

(11) **EP 0 587 870 B1**
(45) Veröffentlichungstag und Bekanntmachung des Hinweises auf die Patenterteilung: **21.02.1996**
(21) Anmeldenummer: 93908892.8
(22) Anmeldetag: 02.04.1993
(51) Int. Cl.: A21C 3/08

(54) **VERFAHREN UND VORRICHTUNG ZUR MASCHINELLEN HERSTELLUNG VON BREZELN**
PROCESS AND DEVICE FOR MECHANICALLY PRODUCING PRETZELS
PROCEDE ET DISPOSITIF DE FABRICATION MECANIQUE DE BRETZELS

(30) Priorität: 02.04.1992 DE 4211043
(43) Veröffentlichungstag der Anmeldung: 23.03.1994
(73) Patentinhaber: MUK METALL- UND KUNSTSTOFF- VERTRIEBS GMBH, D-86381 Krumbach (DE)
(72) Erfinder: FEHR, Werner, D-86381 Krumbach (DE)
(74) Vertreter: KUHNEN, WACKER & PARTNER
(86) Internationale Anmeldenummer: EP9300817
(87) Internationale Veröffentlichungsnummer: WO9319607

(56) Entgegenhaltungen:
- CH-A- 470 839
- US-A- 3 511 189

## Beschreibung

Die Erfindung bezieht sich auf ein Verfahren zur maschinellen Herstellung von Brezeln aus einer Teigportion gemäß dem Oberbegriff des Patentanspruchs 1 und auf eine Vorrichtung zur Durchführung eines solchen Verfahrens gemäß dem Oberbegriff des Patentanspruchs 4.

Ein derartiges Verfahren und eine derartige Vorrichtung sind aus der CH-A-470 839 bekannt.

Man hat bereits vielfach versucht, die Herstellung von Brezeln in einer Form zu automatisieren, daß sich die Herstellung auch für Bäckerei-Kleinbetriebe lohnt. Bislang ist davon auszugehen, daß bei der manuellen Fertigung die tatsächlichen Herstellungskosten unter Berücksichtigung der verhältnismäßig hohen Personalkosten über den Abgabepreis der Backware nicht weiter gegeben werden können.

Automatisierte Fertigungsstraßen von Brezeln, wie sie derzeit auf dem Markt sind, arbeiten entweder mit großen Ausschußraten oder sind derart teuer, daß sich die Anschaffungskosten nur bei äußerst großen Stückzahlen amortisieren lassen.

Obwohl bereits sehr früh versucht wurde, Lösungen zur maschinellen Herstellung von Brezeln zu suchen, um den Zeit- und Personalaufwand bei der Herstellung dieser Backwaren zu reduzieren, haften den bislang bekannt gewordenen Ansätzen durchwegs Mängel an, die einen wirtschaftlichen Einsatz bekannter Geräte insbesondere für Bäckerei-Kleinbetriebe schwer zulassen. Insbesondere für solche Betriebe kommt es beim Einsatz maschineller Mittel im Fertigungsprozeß darauf an, daß die Konstruktion und deren Steuerung möglichst einfach und betriebssicher ist, wobei ein Höchstmaß an Wartungs- und Reinigungsfreundlichkeit erwartet wird und vorausgesetzt wird, daß die Bedienung auch von Hilfskräften vorgenommen werden kann. Bekannte Geräte sind aus folgenden Gründen hierfür nicht geeignet:

Aus der DE-AS 1782289 ist eine Vorrichtung zum Schlingen von Brezeln bekannt geworden, deren Kinematik den Brezel-Schlingvorgang bei der Herstellung von Hand zum Vorbild hat. Dabei wird vorausgesetzt, daß der den Ausgangspunkt für den Brezel-Schlingvorgang bildende Teigstrang in ganz bestimmter Ausrichtung und Formgebung auf einer Unterlage zu liegen kommt, so daß die von koaxialen Wellen getragenen Greifer die dünneren Strangenden fassen und im Zusammenwirken mit speziell gestalteten Rückhaltegreifern den Schlingvorgang so durchführen können, daß am Ende des Schlingvorgangs die Strangenden exakt über den Sollstellen im Übergangsbereich zum Brezel-Mittelstück zu liegen kommen. Im Hinblick darauf, daß die Strangenden regelmäßig wesentlich dünner als das Strang-Mittelstück ausgebildet sind, ergibt sich bei Verwendung dieser bekannten Schlingvorrichtung eine verhältnismäßig hohe Ausschußrate, wobei hinzu kommt, daß in diesem Stand der Technik ein Lösungsansatz weder für die genaue Positionierung des Teigstrangs noch für den Weitertransport des fertiggeschlungenen Brezel-Rohlings gegeben wird.

Diese Nachteile wurden frühzeitig erkannt, und in der DE-OS 27 31 997 wird ein Verfahren und eine Vorrichtung zur Herstellung derartiger Brezel beschrieben, mit der der Teigstrang mit größerer Schonung in eine Brezelform geschlungen werden sollte. Gleichzeitig wurde mit dieser bekannten Vorrichtung das Problem gelöst, den geschlungenen Brezel-Rohling möglichst schonend weiterzutransportieren. Die zu diesem Zweck zweiteilig ausgeführte Schling-Auflage wurde mit zwei Schwenkachsen ausgestattet, die nach Beendigung des Schlingvorgangs freigegeben wurden, so daß die geschlungene Brezel nach unten fallen konnte. Die sich auf diese Weise öffnende Auflage-Klappe stand jedoch beim Schlingvorgang der Brezel still, und der Teigstrang mußte über eine beträchtliche Strecke während des Schlingvorgangs über diese Unterlage gezogen werden. Dies wirkt sich bereits beim Schlingen weniger Brezeln so aus, daß sich auf der Auflage eine Teigschicht aufbaut, die sich immer weiter aufbaut und schließlich eine Unterbrechung des maschinellen Schlingvorgangs nach sich zieht. Weil darüberhinaus bei dieser bekannten Kinematik gleichzeitig mit der Drehbewegung des Schlingkörpers eine synchrone Förderbewegung für den Teigstrang durchgeführt werden mußte, hat sich dieses bekannte Verfahren bzw. diese bekannte Vorrichtung mangels ausreichender Synchronisierbarkeit der Bewegungen nicht durchsetzen können.

Man hat auch bereits frühzeitig versucht, die Kinematik beim Schlingvorgang des Teigstrangs einer Variation zu unterziehen. Das Resultat derartiger Abwandlungen war in der Regel ein sehr komplexer und damit auch störanfälliger Bewegungsmechanismus für die einzelnen Funktionsteile der Vorrichtung, wie er beispielsweise in der DE-PS 45 73 08 gezeigt ist.

Aus der DE-OS 22 10 845 ist eine automatische Maschine zum Formen von Brezeln bekannt, bei der ein auf seine Länge ausgerollter Teigstrang mittels eines Förderbandes auf eine bogenförmig gekrümmte Kappe zubewegt wird, so daß sich der Teigstrang zunächst bogenförmig um die Kappe herumlegt und die Strangenden des Teigstrangs von einer weiteren angetriebenen Unterlage unter Zuhilfenahme von Leitblechen ergriffen werden. Nachdem der Teigstrang in eine U-Form gebracht ist, werden die Enden des Teigstrangs unter Zuhilfenahme einer Andrückwalze fixiert und ein die zweite bewegte Unterlage aufnehmender Rahmen wird um 360° gedreht, wodurch eine Verwindung der Teigstrangenden erfolgt. Schließlich wird das bogenförmige Teil der Brezel in Richtung auf die beiden freien Enden umgeklappt, wobei zuvor die Andrückwalze angehoben wird, damit letztere den Andrückvorgang der Teigstrangeneden auf das Brezel-Mittelstück nicht behindert. Bei diesem Verfahren wird der Brezel-Rohling erheblichen Beschleunigungen unterworfen, was eine exakte lagemäßige Ausrichtung des Brezel-Rohlings erschwert, so daß die weitere Verarbeitung nur mit einem zusätzlichen Mehraufwand möglich ist. Auch liegen die Brezel-Rohlinge nach dem Verlassen der Brezel-Schlingvorrichtung auf dem "Gesicht", so daß die weitere Handhabung des Brezel-Rohlings im Fertigungsprozeß, der noch eine Vielzahl von Vorgängen, wie die Belaugung, die Besalzung und gegebenenfalls das Einbringen einer Ritzung im Bereich des dickeren Brezel-Mittelstücks umfaßt, erschwert ist.

Mit der Brezel-Schlingvorrichtung gemäß DE-OS 39 06 310 liegt die geschlungene Brezel zwar nicht mit dem "Gesicht" nach unten, das Problem des Brezeltransports durch die Vorrichtung wird allerdings in diesem bekannten Fall nur durch eine verhältnismäßig aufwendige Rahmenkonstruktion lösbar. Für jede, in der Brezel-Schlingvorrichtung zu schlingende Brezel wird ein separater Rahmen mit entsprechendem Getriebe benötigt, wobei im übrigen auch bei dieser bekannten Vorrichtung das Problem des Auflegens des Teigstrangs nicht maschinell gelöst ist. Es wird bei dieser bekannten Vorrichtung auch keine Lösung dafür angegeben, wie die Teigstrangenden bzw. der Teigstrang auf der Formplatte lagegenau festgehalten werden könnte. Dabei ist zu berücksichtigen, daß Adhäsionskräfte hierzu schon aus hygienischen Gründen nicht herangezogen werden können. Es stellt sich auch heraus, daß es grundsätzlich schwierig ist, die loseliegenden Teigstrangenden nach erfolgtem Schlingvorgang mittels einer Klappe auf das Mittelstück der Brezel aufzulegen, da die hierbei auftretenden Beschleunigungs- und Fliehkräfte zu einer mehr oder weniger unkontrollierten Bewegung der Teigstrangeneden führen. Auch ist bei dieser bekannten Vorrichtung nicht das Problem der Brezel-Rohling-Entnahme aus der Schlingvorrichtung gelöst. Schließlich zeigt sich, daß die die Brezel-Schlingvorrichtung durchlaufenden Rahmen einen erheblichen Platzbedarf haben und zum Betrieb in einer Bäckerei allein schon deshalb nur bedingt geeignet sind, da sie leicht verstauben und schwer zu reinigen sind.

Einen noch komplexeren Aufbau einer Vorrichtung zum Schlingen der Brezelform zeigt die DE-OS 32 08 105. Bei dieser Variante wird die Achse der 360°-Drehbewegung wiederum in die Ebene des in U-Form gebogenen Teigstrangs gelegt. Es ist eine verhältnismäßig komplexe Mechanik erforderlich, um den Teigstrang zunächst in eine Omega-ähnliche Form zu bringen, dann den Schlingvorgang auszuführen und schließlich eine Hälfte des Teiglings umzuklappen. Abgesehen davon, daß die hierfür vorgesehene Mechanik aufgrund des komplizierten Aufbaus verhältnismäßig langsam arbeitet, hat dieses bekannte Verfahren wiederum den Nachteil, daß keine Mittel vorhanden sind, mit denen ein vorgeformter Teigstrang reproduzierbar der eigentlichen Schlingvorrichtung übergeben werden kann. Auch ist mit dieser bekannten Maschine zum Verformen des Teigstrangs zu einer Brezel gerade das Problem der weiteren Abgabe des vorgeformten Brezel-Rohlings an die nachgeschalteten Arbeitsstationen im Bäckereibetrieb nicht gelöst. Aufgrund der auftretenden hohen Beschleunigungen des Teigstrangs sind unkontrollierte Verformungen und damit eine gewisse Ausschußrate nicht auszuschließen. Auch diese Vorrichtung hat sich deshalb auf dem Markt nicht durchsetzen können.

Aus der DE-PS 39 03 701 bzw. aus der EP 0 382 219 A1 ist noch ein Verfahren zum Formen von Brezeln bekannt geworden, mit der die Anzahl der Vorrichtungsbauteile reduziert und die Kinematik vereinfacht werden soll. Dabei werden die Enden des Teigstrangs zunächst von zwei nebeneinander angeordneten Greifbändern erfaßt, die den Teigstrang in Förderrichtung bewegen. Während der Vorwärtsbewegung senkt sich die Auflage allmählich ab, so daß der Teigstrang zwischen den Enden eine Schlaufenform einnimmt. Mittels gegensinnig angetriebener Bürstenwalzen wird die Schlaufe relativ zu den Enden um 360° verdreht. Der Teigling läuft dann auf eine rampenförmig ansteigende Förderfläche auf, deren Bewegungsgeschwindigkeit so eingestellt wird, daß ein Umklappen der verdrillten Endabschnitte des Teiglings auf das Mittelstück zu erfolgt. Die Haltebänder für die Enden des Teigstrangs laufen anschließend geringfügig auseinander. Sobald die Teigenden über den Sollstellen der Verbindung zum Brezel-Mittelstück zu liegen kommen, werden die Teigstränge freigegeben, so daß sie nach unten auf das Brezel-Mittelstück absinken können. Abgesehen davon, daß die Verwendung von Bürsten schon aus hygienischen Gründen im Bäckereibetrieb nicht empfehlenswert sind, sind bei diesem bekannten Verfahren eine Reihe von technischen Unsicherheiten zu befürchten, die darauf zurückzuführen sind, daß zu große Kräfte, wie zum Beispiel Flieh- und Schwerkräfte auf den verhältnismäßig empfindlichen Teigstrang einwirken. Nicht gelöst mit dieser bekannten Vorrichtung ist auch das Problem einer definierten Zuführung des Teigstrangs zur eigentlichen Schlingvorrichtung. Auch erfolgt das Ablegen der Teigstrangenden verhältnismäßig unkontrolliert, was eine unerwünschte Ausschußrate zur Folge hat.

Ähnliches gilt auch für die Brezel-Schlingmaschine gemäß DE-AS 1179884. Gemäß diesem Verfahren wird ein in einer Mulde abgelegter Teigstrang durch eine Saugdüse am Ende zweier Schwenkhebel erfaßt, die dann synchron aufeinander zugeschwenkt werden. Dabei soll sich der Teigstrang bogenförmig um eine leicht gekrümmte Stützfläche legen, die auf einem Drehtisch ausgebildet ist. Sobald die Schwenkarme eine Position nahe der Drehachse des Schwenktischs erreicht haben, führt dieser eine 360°-Drehbewegung aus, woraufhin die Schwenkarme voneinander weg so weit geschwenkt werden, bis die Teigstrangenden die Sollage über dem Brezel-Mittelstück erreicht haben. Die Schwenkarme sind entlang ihrer Achsen bewegbar gehalten, so daß durch die Absenkbewegung der Schwenkarme ein Andrücken der Teigstrangeneden auf das Mittelstück durchgeführt werden kann. Abgesehen davon, daß durch die reine Gegeneinanderbewegung der Schwenkarme nur bei einer ganz bestimmten Teigkonsistenz überhaupt sichergestellt werden kann, daß der Teigstrang - ohne zu reißen - in eine Bogenform gebracht wird, liegt der hauptsächliche Nachteil dieser bekannten Brezel-Schlingmaschine darin, daß kein lebensmittelgerechter Betrieb möglich ist. Bereits das Ansaugen des Teigstrangs mittels Untordruck führt entweder zu einer nicht ausreichenden Haltekraft, oder aber dazu, daß der Teig zu stark angesaugt wird, so daß das abschließende Ablegen bzw. Abwerfen der Teigstrangenden nicht mehr problemlos durchführbar ist. Im übrigen ist die Mechanik verhältnismäßig komplex, was eine wirtschaftliche Herstellbarkeit der Vorrichtung in Frage stellt. Schließlich ist auch in diesem bekannten Fall die Herstellung und die Ablage des Teigstrangs einerseits sowie des fertiggeschlungenen Brezel-Rohlings andererseits nicht reproduzierbar gelöst.

Aus der DE-OS 39 00 950 ist noch ein Verfahren zur Herstellung von Brezeln sowie eine Vorrichtung zur Durchführung dieses Verfahrens bekannt, bei dem bzw. bei der der Mittelteil eines quer zur Transportrichtung angestellten Teigstrangs während der Fortbewegung von einem schaufelförmigen Teil im wesentlichen im Zentrum ergriffen und dort etwas hochgehoben wird. Daraufhin führt das schaufelförmige Teil eine 360°-Drehbewegung durch, wobei die Strangenden durch Eigenreibung fixiert bleiben sollen. Nach Vollendung der Rotationsbewegung kann das Mittelteil wieder abgesenkt werden, so daß es bei geeigneter Dimensionierung und Einhaltung der Abmessungen des Teigstrangs sowie durch geeignete Synchronisierung der Einzel-Bewegungen auf die Enden des Teigstrangs fallen kann. Der Vorteil dieser Vorrichtung besteht darin, daß der Bewegungsablauf verhältnismäßig einfach ist. Allerdings zeigt sich in der Praxis, daß sich bei einer solchen Handhabung des Teigstrangs letzterer leicht zum Verziehen neigt. Auch ist es schwer, die am Ende der Schlingvorrichtung auf dem "Gesicht" liegende Brezel angemessen weiterzuverarbeiten.

Aus der DE-PS 57 67 88 schließlich ist ein Verfahren zur maschinellen Herstellung von Brezeln aus einer Teigportion gemäß dem Oberbegriff des Patentanspruchs 1 bekannt. Bei dieser Vorrichtung wird auf die eingangs beschriebenen, den Teigstrang verhältnismäßig hoch belastende Klappbewegung zwischen den geflochtenen Teigstrangenden um dem Brezel-Mittelstück verzichtet. Statt dessen wird der von einer Teigstrang-Fertigungsvorrichtung abgeworfene Teigstrang mit sich verjüngenden Enden quer vor einen Mitnehmerklotz eines Förderbandes transportiert, der im Zusammenwirken mit einem Paar von Leitstücken den Teigstrang in eine U-Form bringt. Anschließend werden die Teigstrangenden von einem Greiferpaar ergriffen, das eine gemeinsame Drehachse hat. Der Abstand der Greifer entspricht der lichten Weite des U. Während des Transports wird das Greiferpaar um 360° gedreht, wobei zuvor die Greifer mit den Teigstrangenden angehoben werden. Nach Abschluß der Drehbewegung werden die Greifer wieder abgesenkt und die Teigstrangenden ausgeworfen sowie an das Brezel-Mittelstück angedrückt.

Nachteilig bei dieser Vorrichtung ist, daß trotz eines verhältnismäßig aufwendigen Aufbaus der Mechanik der Abstand der Greifer voneinander auf die Breite des Brezel-Mittelstücks festgelegt ist. Beim Schlingvorgang ergeben sich damit zwangsläufig stark unterschiedliche Dehnungsbeanspruchungen des Teigstrangs, mit der Folge, daß eine symmetrische Brezelform nur schwer erzielbar ist. Auch ist zu berücksichtigen, daß sich übermäßige Teigverformungen auf die Qualität der Brezel auswirken. Schließlich gelingt es auch mit dieser Vorrichtung nicht, die Ausschußrate unter einen Wert zu senken, der für einen Bäckerei-Kleinbetrieb noch akzeptabel sein kann. Auch sind im bekannten Fall die Greifer so aufgebaut, daß sie den zwischenzeitlich stark gestiegenen hygienetechnischen Anforderungen in einem Bäckereibetrieb nicht mehr gewachsen sind.

Aus dem vorstehenden ergibt sich, daß es trotz der Vielzahl von Ansätzen zur Auffindung einer wirtschaftlichen Lösung des Problems der maschinellen Brezelherstellung bislang nicht gelungen ist, ein Verfahren und eine Anlage bereitzustellen, die in der Lage ist, mit geringer Ausschußrate und bei einfacher Bedien- und Steuerbarkeit der Vorrichtung Brezeln mit großer Durchsatzrate komplett zu formen, so daß sich der Einsatz derartiger Maschinen auch für Bäckerei-Kleinbetriebe lohnt.

Der Erfindung liegt deshalb die Aufgabe zugrunde, ein Verfahren und eine Vorrichtung zur maschinellen Herstellung von Brezeln zu schaffen, das bzw. die sich durch ein Höchstmaß an Betriebszuverlässigkeit und Leistungsfähigkeit auszeichnet, wobei die Steuerung und die Bedienung einfach und die Handhabung des Teigs so schonend wie möglich sein soll, und wobei die hygiene- und backtechnischen Kriterien mit Leichtigkeit erfüllbar sein sollen.

Diese Aufgabe wird hinsichtlich des Verfahrens durch die Merkmale des Anspruchs 1 und hinsichtlich der Vorrichtung durch die Merkmale des Patentanspruchs 4 gelöst.

Während bislang - wie der Stand der Technik zeigt - das Augenmerk auf die einzelne Station der maschinellen Herstellung der Brezel-Rohlinge gelegt worden ist, wird erfindungsgemäß das Zusammenwirken der Einzelabläufe beginnend mit der Teigstrangherstellung über die Verschlingung bis zur Ablage der fertig geformten Brezel optimiert. Die Erfindung ist damit das Ergebnis umfangreicher Analysearbeiten, wobei festgestellt wurde, daß durch die erfindungsgemäße Kombination der Lösungsmerkmale ein der Umgebung und den Zielsetzungen des Bäckereibetriebs Rechnung tragender Arbeitsablauf vorgesehen wird, der einerseits hohe Qualität der Brezel und andererseits eine hohe Produktivität der Anlage sicherstellt.

Erfindungsgemäß wird eine Arbeitsweise gelehrt bzw. eine Anlage zur maschinellen Herstellung von Brezeln geschaffen, mit der nicht nur Einzelprobleme, wie z. B. der Schlingvorgang der Brezel, sondern sämtliche für die maschinelle Herstellung entscheidenden Arbeitsschritte wie zum Beispiel die Zuführung des Teigstrangs und die Ablage der geschlungenen Brezel optimiert sind. Dabei beruht die Erfindung zunächst auf der Erkenntnis, daß es für die Durchführung des Schlingvorgangs mit hoher Reproduzierbarkeit ganz entscheidend darauf ankommt, daß der Teigstrang mit exakt kontrollierter Länge und Ausrichtung an das Greiferpaar übergeben wird. Erst dadurch ist sichergestellt, daß sich die Enden des Teigstrangs nach erfolgter Verschlingbewegung exakt an den Sollstellen befinden. Dadurch, daß erfindungsgemäß die Greifer den korrekt erfaßten Teigstrang in einem durchgehenden und zur Symmetrieebene der Brezel spiegelbildlichen Bewegungsablauf in eine definierte Schlaufenform ziehen, in der sich das Mittelstück der Schlaufe entweder kraftschlüssig oder formschlüssig an der Anlage oder an einer der fertigen Brezelform entsprechenden, bogenförmigen Halterungsfläche abstützt, wird die Voraussetzung dafür geschaffen, daß die Schlaufe während des Schlingvorgangs ihre Form und Lage beibehält, so daß während des gesamten Bewegungsablaufs sichegestellt ist, daß die Relativlage der Greifer in Bezug zur Schlaufe unter Kontrolle ist. Erfindungsgemäß wird nicht die Auflage, sondern die Greiferanordnung gedreht.

Dies eröffnet in vorteilhafter Weise die Möglichkeit, die beim Schlingvorgang benutzte Auflage gleichzeitig in den Förderprozeß zur Abgabe der fertig geschlungenen Brezel an die nachgeschaltete Transporteinrichtung einzubeziehen. Erfindungsgemäß wird die fertig geformte, rohe Brezel parallel zu sich selbst aus dem Bereich der Schlingvorrichtung abgegeben. Der Brezel-Rohling wird auf diese Weise auch in dieser Phase möglichst schonend behandelt und liegt am Ausgang der Brezel-Schlingvorrichtung so exakt ausgerichtet auf einer Transporteinrichtung, daß sich eine problemlose Weiterbearbeitung wie zum Beispiel das batchweise Beschichten von Backblechen, anschließen kann. Es hat sich gezeigt, daß sich nach dem erfindungsgemäßen Verfahren mit Leichtigkeit 700 Brezel pro Stunde vollkommen automatisiert herstellen lassen, wobei der zusätzliche Vorteil gegeben ist, daß der Teig verhältnismäßig geringen äußeren Kräften unterworfen wird. Dies wirkt sich nicht nur positiv auf die Qualität des Backwerks aus, sondern stellt auch eine gleichbleibende Form der Brezeln sicher. Damit ist das erfindungsgemäße Verfahren auch für kleinere Bäckereibetriebe lukrativ, da mit der erfindungsgemäßen Anlage schon bei einer Stückzahl von 2000 Brezeln pro Tag eine Arbeitskraft eingespart werden kann.

Eine besonders vorteilhafte Ausgestaltung der Vorrichtung zur Durchführung des Verfahrens ist Gegenstand des Anspruchs 4. Mit diesem Aufbau lassen sich äußerst kurze Bewegungshübe der Teigstrang-Förder- und Handhabungsmittel erzielen, wobei sich der zusätzliche Vorteil einer sehr einfachen Steuerbarkeit ergibt. Die einzelnen Bestandteile der Vorrichtung sind darüberhinaus einfach zu reinigen, so daß die hygienetechnischen Anforderungen mit Leichtigkeit erfüllbar sind. Dabei wird die Schwerkraft in vorteilhafter Weise zur Verarbeitung in der Brezelformmaschine genutzt, wodurch die Leistungsaufnahme der Vorrichtung und die Arbeitsgeschwindigkeit gesteigert werden können. Insbesondere die erfindungsgemäße Halterung der Greifer an der mit einem Dreh- und Hubantrieb ausgestatteten Traverse schafft die Voraussetzung dafür, daß die Schlingvorrichtung mit einem Minimum an Bauraum in eine Backstraße integriert werden kann. Da die Greifer an der Traverse hängen, kann letztere ohne weiteres über einer Vorrichtung zur Zuführung des Teigstrangs, das heißt einem sogenannten Langroller angeordnet werden. Nach dem Ergreifen der Teigstrangenden durch die Greifer und nach dem nach innen Fahren der Greifer in die Nähe des sogenannten "Brezel-Herzes", kann sofort die für den Schlingvorgang erforderliche Drehbewegung ausgeführt werden, weil der Abstand der Greifer von der Drehachse in diesem Moment bereits klein genug ist, um während der Drehung vollständig außerhalb des Langrollers zu bleiben, und weil andererseits die Traverse in jedem Fall oberhalb des Langrollers positioniert ist, so daß eine freie Rotation möglich ist.

Vorteilhafte Weiterbildungen der Erfindung sind Gegenstand der Unteransprüche.

Mit der Variation des erfindungsgemäßen Verfahrens gemäß Anspruch 2 läßt sich die Herstellung noch weiter vereinfachen. Über die Zwischenpuffer-Reihe wird der Weg, den der fertig geschlungene Brezel-Rohling im Takt sukzessive zurücklegen muß, sehr klein gehalten, wodurch die Bewegungsgeschwindigkeit der Brezel-Rohlinge ebenfalls reduziert werden kann. Dies führt zu einer noch schonenderen Behandlung der Teiglinge und zum anderen dazu, daß auch die Vorrichtungsbauteile geringeren Belastungen unterworfen werden, wodurch deren Lebensdauer angehoben wird.

Wenn die Anlage mit einer Backauflage betrieben wird, die in Form eines Förderbandes eine Backstraße mit hintereinnadergeschalteten Gär-, Klima-, Kühl-, Belaugungs- und Besalzungs-, sowie Backzonen durchläuft, genügt für die Bedienung der Gesamtanlage eine einzige Person. Es konnte hierbei festgestellt werden, daß der Arbeitsaufwand für die Brezelherstellung hierdurch auf ca. 20% des Aufwandes bei handwerklicher Herstellung reduziert werden konnte.

Vorzugsweise wird der Transporteinrichtung für die fertig geschlungenen Brezel-Rohlinge zur Weiterverarbeitung in der Backstraße eine Zwischenspeicher-Auflage gemäß Patentanspruch 4 vorgeschaltet. Diese Zwischenspeicher-Auflage hat vorzugsweise eine Länge, die der Breite der Transporteinrichtung, das heißt der Breite eines Förderbandes oder eines Backblechs entspricht.

Die Backauflage in Form eines Backblechs oder eines Förderbandes wird vorzugsweise schrittweise angetrieben, so daß die von der Zwischenspeicher-Auflage quasi abtropfenden Brezel-Rohlinge schlagartig eine Reihe des Backblechs bzw. der Backauflage füllen.

Aufgrund der definierten und symmetrischen Antriebsbewegung der Teigstrangenden hat es sich als ausreichend erwiesen, den mittels der Greifer auf die Auflage gezogenen Teigstrang allein durch Reibungskraft in Lage zu halten. Dies ist unter anderem auch darauf zurückzuführen, daß der Schlingvorgang erst dann durchgeführt wird, wenn die Teigstrangenden im wesentlichen über dem "Herz" der Brezel positioniert sind. Mit der Weiterbildung des Anspruchs 5 ergibt sich allerdings der zusätzliche Vorteil, daß die Bewegungsgeschwindigkeit der Greifer weiter angehoben werden kann, ohne die Positionierungsgenauigkeit des Brezel-Mittelstücks zu beeinträchtigen.

Wenn dem rotatorischen Antrieb für die Greifer-Traverse eine Umsteuereinrichtung gemäß Anspruch 6 zugeordnet wird, kann im Bereich des Drehantriebs auf Kontakt-Schleifringe verzichtet werden, was der Betriebszuverlässigkeit des Antriebs und der Steuerung zugute kommt.

Die einzelnen Antriebe der bewegten Komponenten können unterschiedliche Energiequellen haben. Besonders vorteilhaft lassen sich allerdings Schrittmotoren einsetzen. Diese Schrittmotoren haben zwischenzeitlich regelmäßig eine sehr hohe Auflösung, wodurch die Lagegenauigkeit der Greifer weiter gesteigert werden kann.

Aufgrund der gegensinnigen und spiegelbildlichen Bewegungssteuerung der Greifer und aufgrund dessen, daß der Drehantrieb zusammen mit der Traverse am Haltekopf hängt, genügt pro Bewegungsachse ein einziger Antriebsmotor. Die Anlage wird dadurch verhältnismäßig kopakt und einfach aufgebaut.

Das erfindungsgemäße Verfahren und der erfindungsgemäße Aufbau der Vorrichtung zur Durchführung des Verfahrens erlaubt es, die Brezelherstellung im Durchlaufverfahren, das heißt mit einer weitestgehenden Automation der Arbeitsschritte von der Teigeinbringung bis zur Entnahme der fertig gebackenen Brezel durchzuführen. Dies ist Gegenstand der Weiterbildung gemäß Anspruch 6, gemäß dem vorzugsweise die Backauflage von einem Förderband gebildet ist, das vorzugsweise getaktet eine Backstraße mit hintereinandergeschalteten Funktionszonen durchläuft. Den unterschiedlichen Verweilzeiten in den einzelnen Zonen der Backstraße kann durch geeignte Anpassung der betreffenden Durchlaufstrecke in diesen Zonen Rechnung getragen werden.

Es ist auch möglich, die Backauflage in Form von Backblechen auszubilden, die nacheinander von einem Stapel auf ein Förderband gegeben und nach Durchlaufen des Förderbandes in einer Stapelvorrichtung gestapelt werden. Von dort werden die gestapelten Backbleche vorzugsweise auf einen Sickenwagen übergeben, der die Brezel-Rohlinge in der Gär-, Klima- und Kühlzone begleitet.

Eine vorteilhafte Ausgestaltung der Vorrichtung zur Herstellung eines Teigstrangs mit exakt vorbestimmten Querschnitts- und Längenabmessungen, wie sie beispielsweise zur Herstellung eines in der Mitte dickeren Teigstrangs für die Brezelherstellung verwendet werden kann, ist Gegenstand des Patentanspruchs 8. Herkömmliche Vorrichtungen dieser Art, wie sie beispielsweise unter der Bezeichnung "Langroller" in der Branche bekannt sind, haben den Nachteil, daß der Teigstrang häufig unterschiedlich lang wird und die Verdickung des Teigstrangs nicht immer im Zentrum des Teigstrangs zu liegen kommt. Bei der manuellen Fertigung sind derartige Formabweichungen leichter hinzunehmen, da sich der Bäcker auf die individuell vorliegende Formgebung des Teigstrangs einstellen kann. Bei der maschinellen Fertigung der Brezel können sich derartige Formabweichungen äußerst nachteilig auf den Herstellungsprozeß auswirken. Zum einen kann nicht mehr sichergestellt werden, daß beispielsweise die Greifer an vorbestimmten Positionen tatsächlich den Teigstrang an der richtigen Stelle übernehmen. Zum anderen können sich durch derartige Form- und/oder Lageabweichungen unsymmetrische und damit gegebenenfalls örtlich zu hohe Beanspruchungen des Teiglings ergeben, was in beiden Fällen zu einer Anhebung der Ausschußrate führt. Die erfindungsgemäße Vorrichtung zur Herstellung des Teigstrangs mit vorbestimmten Querschnitts- und Längenabmessungen stellt in jedem Falle sicher, daß der aus der Vorrichtung austretende Teigstrang nicht nur eine exakt vorgegebene Form, sondern auch eine vorbestimmte Lage zu einer Bezugsfläche hat. Dies erleichtert die weitere Handhabung des Teigstrangs in erheblichem Maße. Einrichtungen zum Erfassen des Teigstrangs können hinsichtlich Aufbau und Steuerung wesentlich vereinfacht werden, was gleichermaßen für die Steuerung während des Schlingvorgangs zutrifft. Bei der erfindungsgemäßen Vorrichtung wird somit der Teigling einer kombinierten Walk- und Preßbeanspruchung unterzogen. Mit anderen Worten, dem Teigling wird ein Förderquerschnitt ganz bestimmter Abmessungen zugeordnet, der zusammen mit dem Teigling in Förderrichtung bewegt wird.

Mit einem gegensinnigen Antrieb der beiden Oberflächen mit unterschiedlicher Geschwindigkeit ergibt sich eine erhebliche Verkürzung der Baulänge der Teig-Umformeinrichtung, ohne dabei die Arbeitsgenauigkeit zu verschlechtern. Die spezielle Ausbildung der relativ zueinander bewegten Oberflächen gemäß Anspruch 8 hat besondere hygienetechnische Vorteile. Es kann mit einfachen Mitteln sichergestellt werden, daß die einzelnen Förderbandsegmente beispielsweise zu Reinigungszwecken ausgebaut werden. Dies gelingt besonders leicht, wenn die Segmente leistenartig gestaltet sind.

Wenn die Segmente des Segment-Förderbandes gemäß Anspruch 9 mit ihren aufeinander zuweisenden Flächen profilartig ineinander greifen, kann der Normaldruck auf den sich zwischen den Segmenten befindlichen Teigling verstärkt werden, da sich hierdurch der auf dem Teig aufgebrachte Druck auf mehrere benachbarte Segmente verteilen kann.

Ein weiterer Vorzug der erfindungsgemäßen Vorrichtung besteht darin, daß durch geeignete Anordnung von Leitwalzen, die vorzugsweise lagemäßig justierbar sind, der Verlauf des auf den Teigling ausgeübten Normaldrucks entlang der Förder- und Umformstrecke gezielt beeinflußbar ist. Diese Weiterbildung ist Gegenstand des zweiten Teilmerkmals des Anspruchs 9, wobei unter dem Begriff "Einlaufspalt" im weitesten Sinne der entlang der Förderstrecke ausgebildete Keilspalt zwischen den Segment-Förderbändern verstanden werden soll. Entsprechend dieser Weiterbildung kann darauf Einfluß genommen werden, wie sich die Segmentbänder allmählich im Laufe der Förderstrecke einander annähern. Dadurch kann eine allmähliche Druckzunahme eingestellt werden. Es ist auf diese Weise möglich, erst am Ende der Durchlauf- bzw. Förderstrecke die Segmentbänder so nahe zu bringen, daß sich die Seitenränder berühren und durch den hohen Formaldruck dem Teigstrang die durch die eingefräste Profilform in den Segmenten vorgegebene Länge und Dicke aufprägen.

Im Bereich des Einlaufs der Teigportion ist es von Vorteil, gegebenenfalls unter Zuhilfenahme von weiteren Umlenkrollen, einen erweiterten Einlaufwinkel vorzusehen. Mit dieser Maßnahme kann wirksam verhindert werden, daß Teig zwischen die einzelnen Segmente gelangt. Den gleichen Effekt erzielt man mit der Weiterbildung gemäß dem letzten Teilmerkmals des Anspruchs 9.

Die Weiterbildung gemäß Patentanspruch 10 hat den besonderen Vorteil, daß sich mit einfachen Maßnahmen eine schnellere und kontrolliertere Längung des als Klumpen aufgegebenen Teiglings erzielen läßt, so daß die Baulänge der Teigausrolleinrichtung weiter verkürzt werden kann.

Vorzugsweise bilden die einzelnen Lamellen bzw. Segmente des Segment-Förderbandes in der Umformstrecke, d. h. im Bereich des Gerade- bzw. Parallellaufs eine durchgehende bzw. geschlossene Oberfläche. Durch geeignete Führungen bzw. Abstützungen der Lamellen oder Segmente im seitlichen Bereich oder aber auch im mittleren Bereich kann die Nachgiebigkeit, d. h. die Biegeverformung der Lamellen gesteuert werden, so daß in bestimmten, erwünschten Zonen ein mehr oder weniger großer Umformdruck auf den Teigling aufgebracht werden kann. Hierdurch läßt sich die Form des Teig-Rohlings nach Querschnitt und Länge beim Durchlaufen der Umformstrecke optimal steuern.

Es hat sich herausgestellt, daß eine besonders gute Reproduzierbarkeit der Teig-Umformung dann erzielbar ist, wenn gemäß Patentanspruch 11 die Relativgeschwindigkeit zwischen den sich gegenüberliegenden Lamellenoberflächen so eingestellt wird, daß die Geschwindigkeit des sich entgegen der Transportrichtung bewegenden Bandes lediglich einen Bruchteil der Geschwindigkeit des anderen Bandes ausmacht.

Mit der Ausgestaltung der Teig-Umformeinrichtung nach Patentanspruch 11, zweites Teilmerkmal, wird die Anordnung noch kompakter.

Es hat sich gezeigt, daß sich über eine Variation des Vertikalabstandes der die Teig-Umformeinrichtung bildenden Segment-Förderbänder auch die Länge des Teig-Rohlings am Ausgang der Umformeinrichtung gut steuern läßt. Mit der Weiterbildung des Patentanspruchs 11, drittes Teilmerkmal, wird diese Steuerung auf einfache Weise umgesetzt.

Im Anspruch 12 ist eine Alternative der Umform- und Förderstrecke zum profilierten Segement-Förderband umschrieben. Das aus textilem Material oder einem geeigneten Kunststoff bestehende Förderband stützt sich auf einer profilierten Stützfläche vorzugsweise in Form einer Formplatte ab, die dann aus Kunststoff, Metall aber sogar aus Holz bestehen kann. In diese Stützfläche ist die dem herzustellenden Teigstrang angepaßte Profilform eingearbeitet.

Wenn das Förderband über der profilierten Stützfläche entsprechend profilierte Umlenkwalzen läuft, wird die Formgenauigkeit des herzustellenden Teigstrangs zusätzlich angehoben.

Um Abrieb zwischen den relativ zueinander bewegten Oberflächen zu minimieren, dient die vorteilhafte Weiterbildung gemäß Anspruch 13. Der Gleitstreifen besteht vorzugsweise aus Kunststoff mit guten Gleiteigenschaften.

Eine vorteilhafte Ausgestaltung der die Teigstrangenden erfassenden Greifer ist Gegenstand des Anspruchs 14. Mit dieser Weiterbildung wird der besondere Vorteil erzielt, daß die Greifer den Teigstrang von allen Seiten umfassen können, ohne Gefahr zu laufen, daß Teigpartien eingeklemmt werden.

Auf diese Weise bleibt an den Greifern bei der erneuten Freigabe kein Teig haften, so daß auch die Ablage der Teigstrangenden mit großer Lagegenauigkeit erfolgen kann.

Um die Ausrichtung und Lagegenauigkeit des von der Teig-Umformeinrichtung abgegebenen und den Greifern zugeführten Teigstrangs noch weiter zu verbessern, schafft die Erfindung eine Feinausrichtungs-Vorrichtung, mit der innerhalb kürzester Zeit und damit im Arbeitstakt der maschinell arbeitenden Brezel-Form- und -Schlingvorrichtung sichergestellt werden kann, daß selbst bei hohen Durchlaufgeschwindigkeiten die Enden des Teigstrangs stets an der gleichen, für das Ergreifen durch die Greifer optimalen Stelle zu liegen kommen. Diese Vorrichtung ist Gegenstand des Patentanspruchs 15. Der Transport von der Teig-Umformeinrichtung auf das Auffangrad erfolgt ohne zusätzliche Hilfsenergie, nämlich unter Ausnützung der Schwerkraft. Durch die Formgebung des Auffangrades wird der im mittleren Bereich dickere Teigstrang - bei Brezeln liegt der Durchmesser in diesem Bereich bei etwa 18 mm - schonend behandelt, so daß unerwünschte Abweichungen von der Brezel-Sollform ausgeschlossen werden können. Bei der Feinzentrierung des Strangs auf dem Auffangrad wälzt dieser mittlere Bereich an einer vorzugsweise konkav ausgebildeten Umfangsoberfläche des Auffangrades ab, und zwar im Zentrum des Teigstrangs, in dem die mechanische Festigkeit des Teiglings am größten ist. Unerwünschte einseitige Längungen der dünneren Teiglingenden (Durchmesser am Ende beträgt etwa 4 mm) werden dadurch ausgeschlossen, zumal die Justier-Bewegungen des Auffangrades sehr klein sind und innerhalb kürzester Zeit durchgeführt werden.

Weitere vorteilhafte Ausgestaltungen der Erfindung sind Gegenstand der übrigen Unteransprüche.

Nachstehend werden anhand schematischer Zeichnungen mehrere Ausführungsbeispiele der Erfindung näher erläutert. Es zeigen:
- Fig. 1: eine perspektivische Gesamtansicht einer Vorrichtung zur maschinellen Herstellung von Brezeln;
- Fig. 2: in einem etwas vergrößerten Maßstab eine Einzelheit der Anlage gemäß Fig. 1 bei Blickrichtung entlang II in Fig. 1 in einer ersten Phase des Brezel-Schlingprozesses;
- Fig. 3: die Ansicht entsprechend III in Fig. 2;
- Fig. 4: eine der Fig. 2 ähnliche Ansicht der Vorrichtung in einer späteren Phase des Brezel-Schlingprozesses, in der die Greifer kurz vor Einleitung der 360°-Drehbewegung stehen;
- Fig. 5: die Ansicht entsprechend V in Fig. 4;
- Fig. 6: die Ansicht der Vorrichtung entsprechend den Darstellungen in den Figuren 2 und 4 in einer Phase, in der die Greifer die 360°-Drehbewegung abgeschlossen haben;
- Fig. 7: die Ansicht entsprechend VII in Fig. 6;
- Fig. 8: die Draufsicht der Brezel-Schling- bzw. Formstation beim Andrücken der Strangenden an das Brezel-Mittelteil;
- Fig. 9: eine Seitenansicht eines bei der Vorrichtung nach den Figuren 1 bis 8 verwendeten Langrollers;
- Fig. 10: den Schnitt entsprechend X-X in Fig. 9;
- Fig. 11: in etwas vergrößertem Maßstab eine Teilansicht einer weiteren Ausführungsform der beim Langroller verwendbaren Fördersegmente;
- Fig. 12: eine Prinzipskizze einer weiteren Ausführungsform des Langrollers;
- Fig. 13A: eine Seitenansicht einer weiteren Variante des Langrollers;
- Fig. 13B: in etwas vergrößertem Maßstab den Schnitt entlang XIII*B*-XIII*B* in Fig. 13A;
- Fig. 13C: die Ansicht entsprechend XIII*C* in Fig. 13A;
- Fig. 14: eine perspektivische, schematische Ansicht des Endes bzw. Kopfs eines Greifers;
- Fig. 15: eine schematische Ansicht des Greifers im geschlossenen Zustand;
- Fig. 16: eine schematische Seitenansicht einer weiteren Ausführungsform des Greifers im geöffneten Zustand;
- Fig. 17: eine Draufsicht auf eine Auffangmulde im Bereich eines Randabschnittes gemäß einer ersten Ausführungsform;
- Fig. 18: eine Seitenansicht einer weiteren Ausführungsform einer Auffangmulde für einen Teigstrang gemäß einer zweiten Ausführungsform;
- Fig. 19: die Ansicht entsprechend XIX in Fig. 18; und
- Fig. 20: in einer der Fig. 1 ähnlichen Ansicht eine Backstraße zur vollautomatischen Herstellung von Brezeln.
- Fig. 21: eine perspektivische, schematische Ansicht der Greifer-Halterung zur Veranschaulichung der Kinematik;
- Fig. 22: eine schematisierte, perspektivische Teil-Ansicht einer weiteren Ausführungsform der Greifer-Halterung;
- Fig. 23: eine schematisierte Seitenansicht der Vorrichtung gemäß Fig. 22 bei einer Blickrichtung entlang XXIII in Fig. 22;
- Fig. 24: eine Teil-Schnittansicht des Antriebs für eine Hohlwelle der Vorrichtung gemäß Fig. 22 und 23;
- Fig. 25: eine Teil-Schnittansicht zur Veranschaulichung der Kraftübertragung von der Innenwelle der Vorrichtung nach Fig. 22 bis 24 auf Greifer-Schlitten in der Traverse;
- Fig. 26: den Schnitt gemäß XXVI-XXVI in Fig. 25;
- Fig. 27: einen Horizontalschnitt entsprechend XXVII-XXVII in Fig. 23 (um 180° gedreht);
- Fig. 28: eine schematisierte Ansicht einer weiteren Ausführungsform einer Teigling-Umformeinrichtung;
- Fig. 29: eine Stirnansicht gemäß XXIX in Fig. 28 (in vergrößertem Maßstab);
- Fig. 30: die Ansicht der Vorrichtung gemäß Fig. 29 im horizontal hochgeklappten Zustand der Auffangrinnen;
- Fig. 31: die Einzelheit XXXI in Fig. 28; und
- Fig. 32: eine perspektivische Ansicht des äußeren Endes einer Auffangrinne.

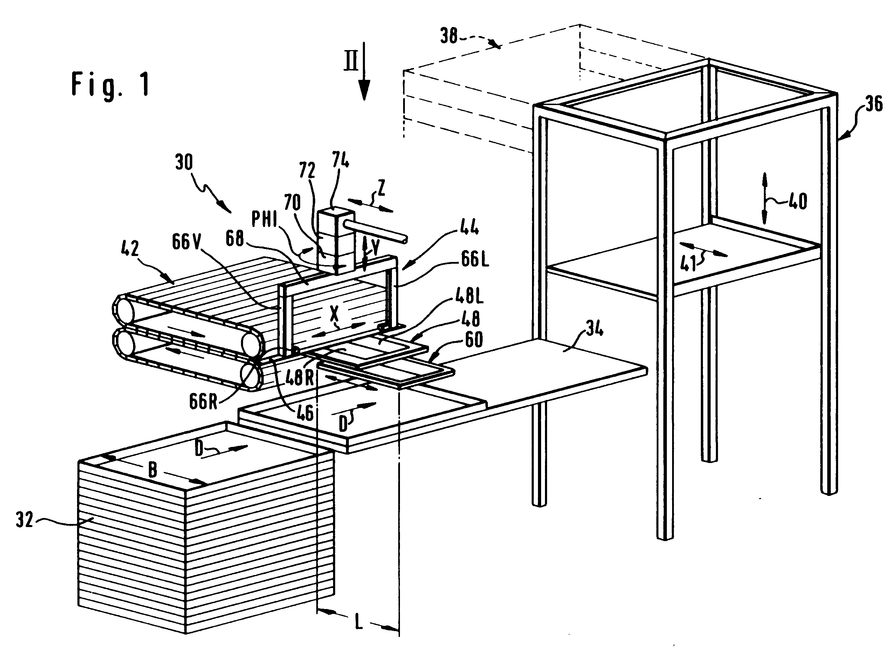

In Fig. 1 ist mit dem Bezugszeichen 30 eine Brezel-Formstation bezeichnet, die Bestandteil einer Backstraße mit einem Stapel von Backblechen 32, einem Transporttisch 34 und einer Backblech-Stapelvorrichtung 36 ist. Bei den Backblechen handelt es sich vorzugsweise um genormte Bleche, die beispielsweise mittels Hydraulikzylindern vereinzelt und dem Transporttisch 34 zugeführt werden. Mit gestrichelten Linien ist ein Sickenwagen 38 angedeutet, der zur Aufnahme von beispielsweise 18 Backblechen ausgelegt ist, so daß die auf den Backblechen befindlichen Backwaren-Rohlingen in einen nicht näher dargestellten Gärschrank transportiert werden können.

Mit Doppelpfeilen 40, 42 ist angedeutet, daß die Backbleche in der Backblech-Stapelvorrichtung 36 horizontal und vertikal verschiebbar sind, wobei vorzugsweise eine automatische Steuerung zur Ein- und Auslagerung der Backbleche 32 Anwendung findet.

Die Brezel-Formstation 30 besteht aus zwei Hauptkomponenten, nämlich einer Umformeinrichtung 42 zur Umformung einer Teigportion in einen Teigstrang vorbestimmter Querschnitts- und Längenabmessungen, und einer Brezelform-Schlingstation 44, in der der Teigstrang erfaßt und zu der typischen Brezelform geschlungen wird. Die Besonderheit des Teigstrangs für die Brezelherstellung besteht darin, daß der im wesentlichen rotationssymmetrische Strang an den Enden gegenüber dem Mittelteil erheblich verjüngt ist, wobei von Region zu Region Unterschiede hinsichtlich der exakten Geometrie des Teigstrangs vorhanden sein können.

Zwischen der Umformeinrichtung 42, die später näher beschrieben werden soll, und der Brezelform-Schlingstation 44 ist eine Ablage bzw. eine Auffangmulde 46 vorgesehen, aus der Teigstrang zur Weiterverarbeitung in der Brezelform-Schlingstation 44 genommen wird.

Die Brezel-Formstation 30 ist so aufgebaut, daß sie mit sehr geringem Platzbedarf und bei weitestgehender Schonung des Teiglings in der Lage ist, bis zu 700 Brezeln pro Stunde zu formen, und zwar mit einem hohen Grad an Reproduzierbarkeit und Wartungsfreundlichkeit der Anlage bei einfacher Steuerung.

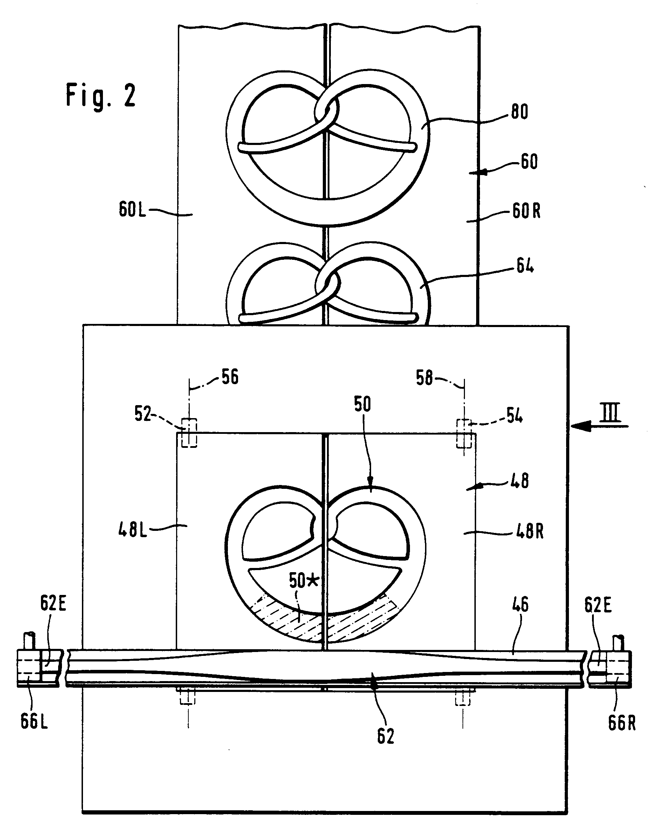

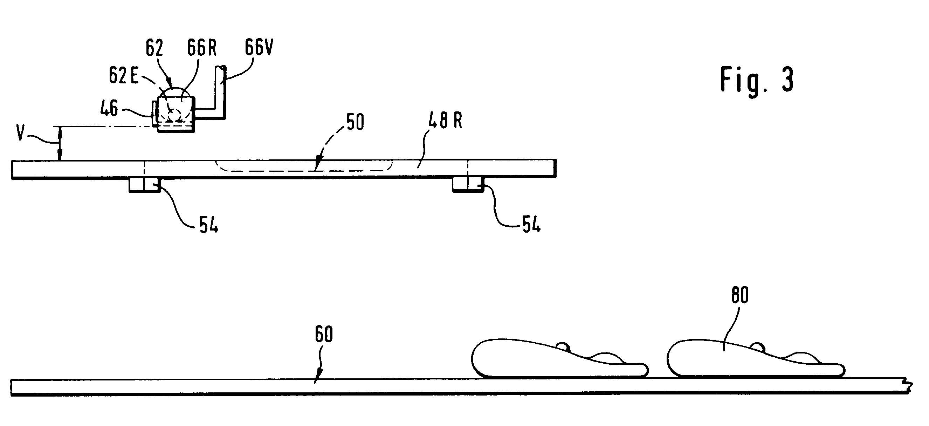

Zu diesem Zweck ist neben und vorzugsweise - wie aus den Figuren 3, 5 und 7 deutlich ersichtlich - um das Maß V geringfügung nach unten versetzt eine vorzugsweise horizontale Auflage 48 vorgesehen, die - wie ebenfalls aus den Figuren 2 und 3 ersichtliche ist - oberseitig eine Einfräsung 50 in Form des herzustellenden Brezelprofils hat. Bei der in den Figuren gezeigten Ausführungsform ist die Einfräsung vollständig, das heißt über das gesamte Brezelprofil durchgefräst. Es ist jedoch an dieser Stelle hervorzuheben, daß die Einarbeitung des Brezelprofils in die Auflage nicht unbedingt erforderlich ist, wenn die nachfolgend näher zu beschreibende Steuerung der Greifer Anwendung findet. Auch ist es gleichermaßen denkbar, das Brezelprofil lediglich bereichsweise, beispielsweise im schraffiert angedeuteten Bereich 50* des Brezel-Mittelstücks vorzusehen, das heißt in die Auflage 48 einzuarbeiten.

Die Auflage 48 besteht aus zwei Teilen 48L und 48R, denen jeweils ein Schwenkscharnier 52 bzw. 54 zugeordnet ist. Die Achsen 56, 58 verlaufen parallel zueinander und nahe der äußeren Längskanten der damit als Schwenkklappen ausgebildeten Auflageteile 48L bzw. 48R. Mittels eines nicht näher dargestellten Antriebs- und Steuermechanismus können die Auflageklappen 48L und 48R getaktet zwischen der in den Figuren dargestellten Stellung, in der sie eine ebene Auflage bilden, und einer dazu um 90° drehverschwenkten Stellung bewegt werden, in der die Auflageklappen 48L und 48R parallel zueinander stehen und im wesentlichen vertikal nach unten weisen. Der Antrieb der Auflageklappen 48L und 48R erfolgt gegensinnig und synchron, so daß die auf der Auflage 48 fertiggeschlungene Brezel während der gesamten Verschwenkbewegung der Auflageklappen 48L und 48R parallel zu sich selbst nach unten versetzt und in einer im wesentlichen horizontalen Ausrichtung im freien Fall auf eine unterhalb der Auflage 48 angeordnete Zwischenlagerfläche 60 fallen kann, wodurch unerwünschte Verformungen des Brezel-Rohlings ausgeschlossen werden.

Nachfolgend soll näher beschrieben werden, wie auf der Auflage 48 ein von der Umformeinrichtung 42 abgegebener Teigstrang 62 zu einem Brezel-Rohling 64 geschlungen wird:

Für den Transport des Teigstrangs 62 und zu dessen Verschlingung zur Brezelform ist ein Paar von Greifern 66L und 66R vorgesehen, die sich mit einem Halteabschnitt im wesentlichen vertikal erstrecken und an einer horizontalen Traverse 68 gleitend verschiebbar angebracht sind. Den Greifern 66R und 66L ist ein ebenfalls nicht näher dargestellter Antriebsmechanismus zugeordnet, so daß die Greifer einen ersten linearen Bewegungsfreiheitsgrad X erhalten. Die Traverse 68 sitzt an einem Drehkopf 70, dem ein nicht näher dargestellter Drehantrieb mit dem Freiheitsgrad PHI zugeordnet ist. Der Drehkopf 70 sitzt an einem Vertikalschlitten 72 mit einem zweiten Bewegungsfreiheitsgrad Y, der auf dem ersten Bewegungsfreiheitsgrad X senkrecht steht. Getragen wird der Vertikalschlitten 72 von einer Lineareinheit bzw. einem Haltekopf 74 mit einem dritten linearen Bewegungsfreiheitsgrad Z. Für die Achsen X, Y und Z sowie für den rotatorischen Bewegungsfreiheitsgrad PHI sind jeweils Antriebsaggregate vorgesehen, die entweder pneumatisch, hydraulisch oder elektrisch arbeiten. In diesem Zusammenhang können Pneumatik-, Hydraulik-, Linear- und/oder Drehzylinder Anwendung finden. Besonders vorteilhaft ist allerdings für die Achsensteuerung die Anwendung eines Schrittmotors, da auf diese Weise die Synchronisation der einzelnen Achsenbewegungen am einfachsten zu bewerkstelligen ist.

Die Ausgangsposition eines Brezel-Schlingzyklus ist in den Figuren 2 und 3 dargestellt. Die Greifer 66L und 66R fahren dabei die Enden 62E des Teigstrangs 62 an, die - wie nachfolgend noch näher beschrieben wird - aufgrund der besonderen Ausbildung der Umformeinrichtung 42 stets in der gleichen Lagezuordnung zum Koordinatensystem der Schlingstation 44 stehen.

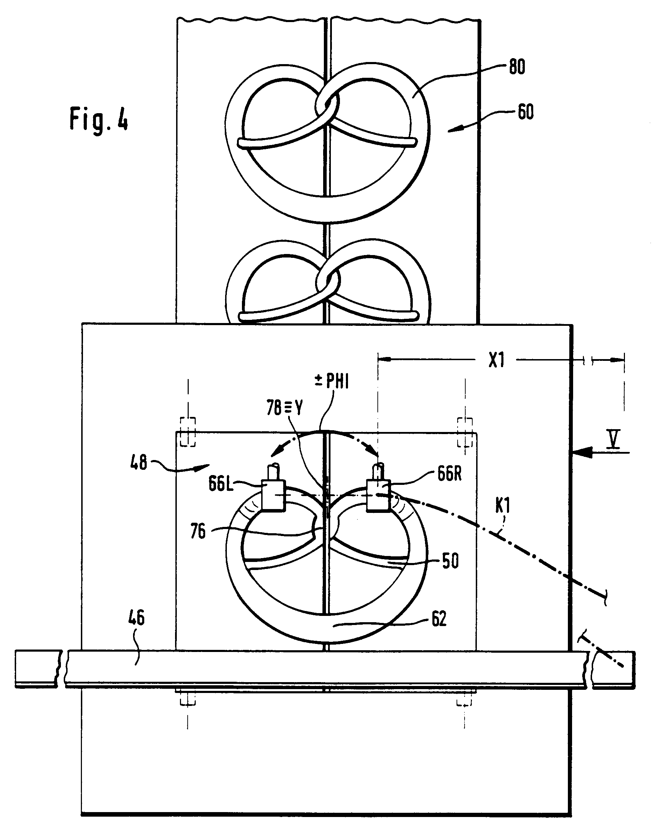

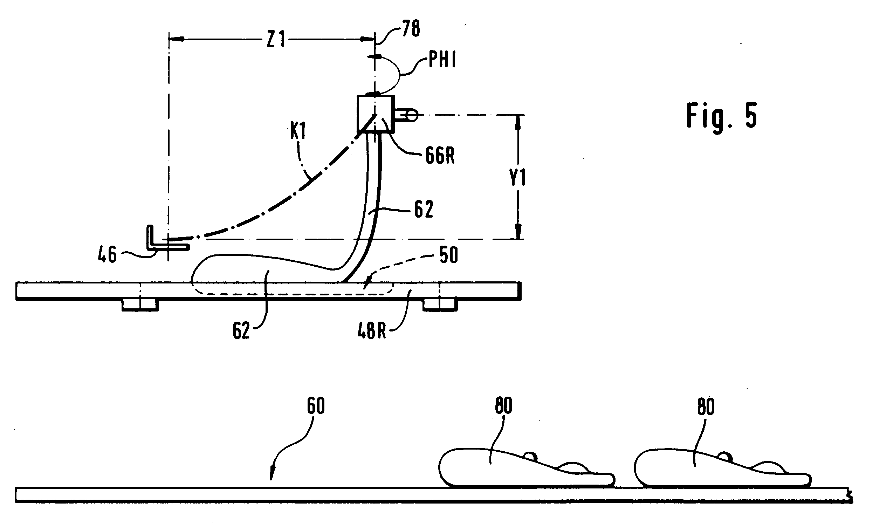

Wenn die Enden 62E erfaßt sind, werden die Greifer 66L und 66R vorzugsweise auf dem kürzesten Weg (Bewegungskurve K1) in die Position gemäß Fig. 4 und 5 verfahren. Dies bedeutet, daß eine synchrone Antriebsbewegung für die Achsen X, Y und Z eingeleitet wird. Dadurch, daß für jede Achse ein gesonderter Antrieb vorgesehen ist, läßt sich der genaue zeitliche Ablauf der Antriebsbewegungen in der betreffenden Achse im Hinblick darauf optimieren, daß bei vorgegebener Taktzeit möglichst geringe Beanspruchungen des Teiglings auftreten. Die einzelnen Bewegungsabschnitte in den drei Achsen sind in den Figuren 4 und 5 mit X1, Y1 und Z1 bezeichnet. Aus den Figuren 4 und 5 ist erkennbar, daß während dieses Bewegungsablaufs der Greifer 66L und 66R der Teigstrang 62 von der Teigstrangauflage 46 herunter auf die Auflage 48 gezogen wird, wobei durch die definierte und gesteuerte Bewegung der Greifer sichergestellt ist, daß der Teigstrang 62 in jedem Zyklus räumlich exakt die Lage gemäß Fig. 4 und 5 einnimmt. Die gegebenenfalls vorgesehene Einfräsung 50 in der Auflage 48 unterstützt diese Zielsetzung zusätzlich. Da die einzelnen Bewegungsachsen unabhängig voneinander ansteuerbar sind, kann - je nach Teig und/oder Auflagekonsistenz - die zeitliche Abfolge der einzelnen Achsenbewegungen so gewählt werden, daß in jedem Fall zunächst sichergestellt ist, daß der Teigstrang von der Auflage 46 auf die Auflage 48 gezogen wird und dort eine vorbestimmte Position einnimmt. Andererseits ist durch die Einzelansteuerung der Bewegungsachsen sichergestellt, daß die Greifer vom Ausgangspunkt zum Punkt gemäß Fig. 4 und 5 in kürzester Zeit fahren können.

Aus den Figuren 4 und 5 ist erkennbar, daß die Greifer 66L und 66R ihre Lage zum vertikalen Halter 66V nicht geändert haben. Die Teigstrangenden sind dementsprechend nach wie vor horizontal ausgerichtet. Es soll jedoch an dieser Stelle hervorgehoben werden, daß es auch möglich ist, während der Bewegung der Greifer aus der Ausgangsposition in die Stellung gemäß Fig. 4 und 5 gleichzeitig und gegensinnig so anzutreiben, daß die Teigstrangenden in der Position gemäß Fig. 4 und 5 vertikal nach oben zeigen. Dadurch wird der Teigstrang noch schonender behandelt.

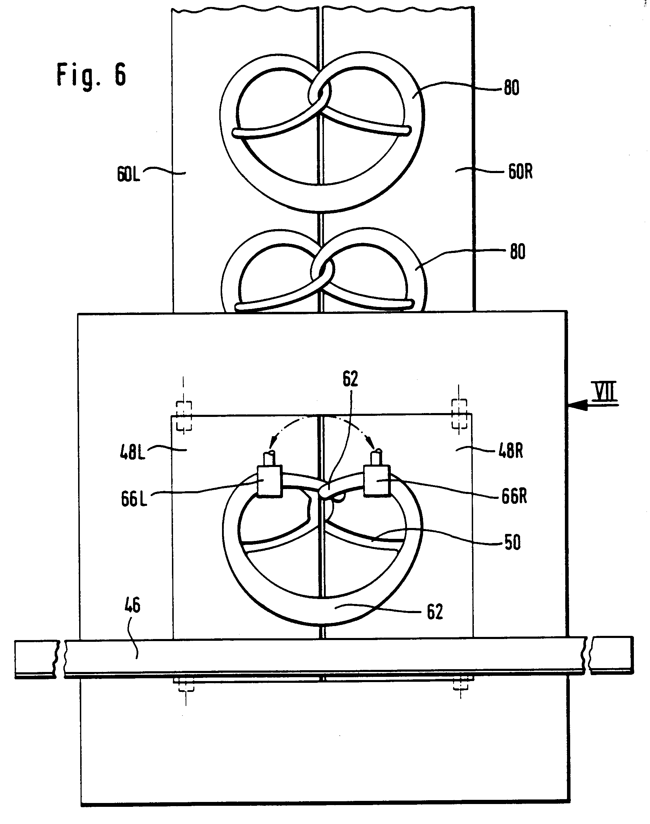

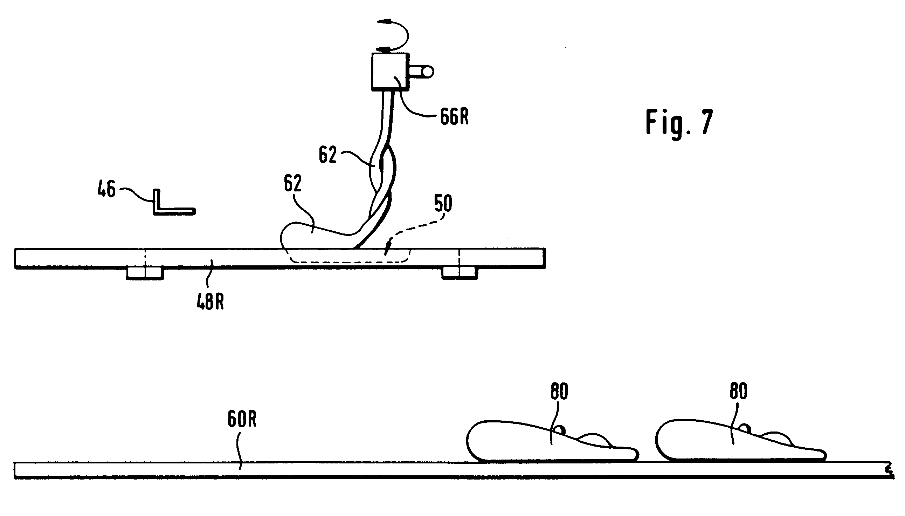

Aus den Figuren 4 und 5 ist ersichtlich, daß sich die Greifer zwischenzeitlich in eine Position bewegt haben, in der sie verhältnismäßig nahe am sogenannten "Herz" der zu formenden Brezel liegen. Mit 76 ist in der Ausfräsung 50 diese Stelle bezeichnet. Damit befindet sich auch das Drehzentrum 78 für den Drehkopf 70 in der Nähe des "Brezelherzes". In dieser Stellung der Greifer, das heißt bei unveränderten Koordinaten X, Y und Z wird mit einer ersten Drehrichtung eine 360°-Drehbewegung des Drehkopfes 70 durchgeführt. Die Traverse liegt vorteilhafterweise oberhalb des Langrollers 42 und die Haltearme 66V stehen so nahe beineinander, daß sie bei Drehung der Traverse mit der Umformeinrichtung 42 nicht kollidieren. Dadurch wird die Steuerung zusätzlich vereinfacht. Die dünneren Teigstrangenden werden bei der Drehung der Traverse (± PHI) - wie aus den Figuren 6 und 7 hervorgeht - ineinander verschlungen. Am Ende der Drehbewegung nehmen die Komponenten der Schlingstation 44 und der Teigstrang 62 die in den Figuren 6 und 7 gezeigten Stellungen ein. Bei der gezeigten Ausführungsform bleiben die Koordinaten X, Y und Z der Greifer während der Verdrehbewegung unverändert. Es ist jedoch auch möglich, zur zusätzlichen Schonung des Teiglings bei bestimmten Brezelformen eine vorbestimmte Bewegungssteuerung in zumindest einer der Achsen X, Y oder Z gleichzeitig vorzusehen, um beispielsweise lokale Überdehnungen des Teigstrangs auszuschließen oder um geringfügige Korrekturen bezüglich der Teigstrang-Form durchzuführen.

Man erkennt aus der Darstellung gemäß Fig. 6, daß sich der Teigstrang in dieser Position bereits weitestgehend an die anzustrebende Endform angenähert hat. Insbesondere dann, wenn hochauflösende Schrittmotoren verwendet werden, kann mit einem hohen Grad an Reproduzierbarkeit sichergestellt werden, daß der Teigstrang in allen aufeinanderfolgenden Takten eine genau definierte, räumliche Ausrichtung bezüglich des Koordinatensystems X, Y und Z einnimmt.

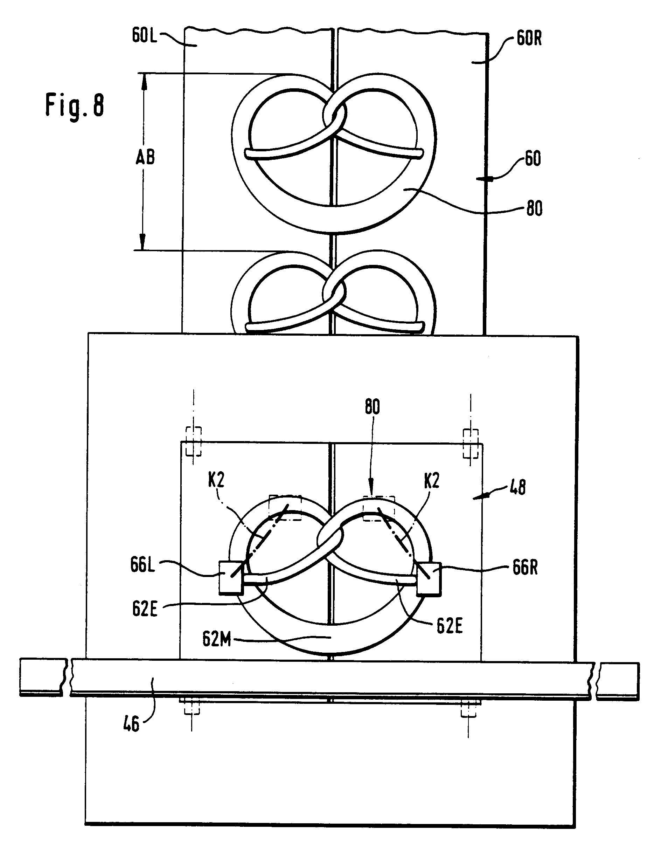

Im nächsten Abschnitt der Bewegung der Greifer werden diese wiederum entlang der drei Koordinaten X, Y und Z entlang der Bewegungskurve K2 in die Stellung gemäß Fig. 8 bewegt. Die Greifer 66 werden dementsprechend nach unten (Achse Y) seitlich auseinander (Achse X) und geringfügig auf die Teigstrang-Auflage (46) zu verfahren, und zwar so lange, bis die Teigstrangenden 62E exakt über den Andruck-Sollstellen an das Teigstrang-Mittelstück 62M liegen. Die Teigstrangenden werden vorzugsweise nach Ruhigstellung der Greiferantriebe freigegeben, so daß die Teigstrangenden nach unten auf das Mittelstück des Teigstrangs 66 sinken. Die Greifer 66L und 66R werden dann um ein kurzes Stück entlang der Achse Y nach oben verfahren, geschlossen und anschließend wieder um eine vorbestimmte Strecke (Achse Y) nach unten gefahren, so daß die Teigstrangenden auf das Mittelstück des Teigstrangs gedrückt werden. Der Formprozeß des Brezel-Rohlings ist damit abgeschlossen. Fertig hergestellte Brezel-Rohlinge sind in den Figuren mit 80 bezeichnet.

Während auf der Auflage 48 der Brezel-Rohling fertiggeschlungen wird, wird die darunterliegende Zwischenlagerfläche 60 so positioniert, daß unter der Auflage 48 ein freier Platz zur Aufnahme des Brezel-Rohlings 80 vorliegt. Der Zwischenlagerfläche 60 ist zu diesem Zweck ein Bewegungsantrieb zugeordnet, der parallel zur Achse Z liegt. Bei der in den Figuren gezeigten Ausführungsform ist die Zwischenlagerfläche 60 von zwei ähnlich den Platten 48R und 48L schwenkbar gelagerte Platten 60R und 60L gebildet, deren Länge L im wesentlichen der Breite B eines Backblechs 32 entspricht und die entlang des in Fig. 1 gezeigten Doppelpfeils hin- und herbewegbar sind. Die Auflageflügel 60R und 60L haben seitliche Schwenkachsen, die parallel zu den Schwenkachsen der Auflageplatten 48R und 48L liegen. Auch die Auflageflügel 60R und 60L sind getaktet zwischen der in den Figuren gezeigten Lage und einer aufgeklappten Stellung verschwenkbar, wobei auch in diesem Fall die Verschwenkbewegung gegensinnig und synchron erfolgt.

Wenn die Zwischenlagerfläche 60 ordnungsgemäß positioniert ist, kann die Verschwenkbewegung der Auflageplatten 48R und 48L freigegeben werden. Der Brezel-Rohling 80 wird parallel zu sich selbst im freien Fall nach unten transportiert und landet auf der Zwischenlagerfläche 60, die anschließend um einen Takt, das heißt einen Brezelabstand AB weitergetaktet wird. Wenn die auf der Zwischenlagerfläche 60 ausgebildete Brezelreihe komplettiert ist, werden die Auflageflügel 60L und 60R nach unten wegverschwenkt und die gesamte Brezelreihe fällt kontrolliert und parallel zu sich selbst auf das darunterliegende Backblech 32, das zwischenzeitlich durch einen geeigneten getakteten Antrieb so positioniert ist, daß unterhalb der Zwischenlagerfläche 60 kein Brezel-Rohling 80 liegt. Wenn durch dieses gleichzeitige Ablegen der Brezel-Rohlinge auf der Zwischenlagerfläche 60 das Backblech 32 vollgelegt ist, wird das nächste, aus dem Stapel genommene Backblech 32 erneut unter die Zwischenlagerfläche 60 positioniert, so daß es zur Aufnahme der nächsten Brezelreihe bereit ist.

Während des vorstehend beschriebenen Transports der Brezel-Rohlinge bewegen sich die Greifer 66L und 66R wieder in die Ausgangsposition gemäß Fig. 2 und 3 und ergreifen den nächsten Teigstrang, der - ebenfalls im Takt - durch die Umformeinrichtung 42 zwischenzeitlich bereitgestellt worden ist. Dann läuft der vorstehend beschriebene Zyklus für den nächsten Teigling ab, wobei allerdings die Drehbwegung des Drehkopfs umgekehrt ist.

Aufgrund der erfindungsgemäßen Anordnung der Einzelkomponenten und der kurzen Bewegungsstrecken genügen für einen Brezel-Schlingtakt etwa fünf Sekunden, wodurch sich eine gegenüber herkömmlichen Vorrichtungen deutlich gesteigerte Durchsatzquote ergibt. Dabei kann das System mit genormten Backblechen arbeiten, so daß sich das Herstellungsverfahren problemlos in konventionell ausgestattete Backstuben integrieren läßt.

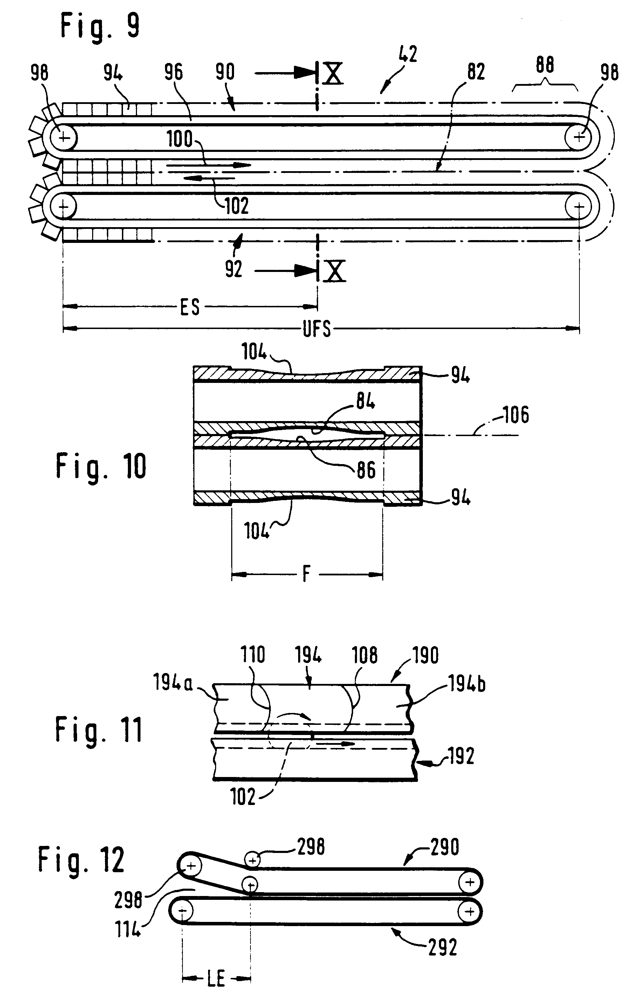

Die hohe Taktfrequenz ist nicht zuletzt deshalb erzielbar, weil aufwendige Steuerungsprozesse zur exakten Positionierung der Greifer bezüglich des Teigstrangs entfallen können. Dies wird dadurch sichergestellt, daß eine speziell angepaßte Umformeinrichtung 42 verwendet wird, welche nachfolgend anhand der Figuren 9 bis 13 näher beschrieben werden soll. Dabei wird bentont, daß diese Umformeinrichtung in vorteilhafter Weise auch für andere Formgebungsprozesse von Teiglingen im Backbetrieb eingesetzt werden kann, wenn es darauf ankommt, rotationssymmetrische Teiglinge vorbestimmter Konsistenz und mit genau definierten Querschnitts- und Längenabmessungen an einer bestimmten Stelle einer Backstraße bereitzustellen.

Den gezeigten Ausführungsformen ist gemeinsam, daß eine nicht näher dargestellte Teigportion in einen Förderspalt 82 zwischen zwei relativ zueinander bewegten Oberflächen 84, 86 gegeben wird, wobei der Förderspalt zumindest im Bereich eines Auslaufs 88 der Umformeinrichtung 42 querschnittsmäßig dem Längsschnitt des zu erzeugenden Teiglings bzw. Teigstrangs entspricht. Auf diese Weise führt die Teigportion während des Durchlaufens des Förderspalts 82 eine Dreh- und Walkbewegung aus, wobei sich der Längsschnitt des Teiglings mit zunehmender Durchlaufstrecke immer mehr dem Längsschnitt des Förderspaltes 82 annähert bzw. diesen allmählich ausfüllt. Die Umformung der Teigportion ist abgeschlossen, wenn der Querschnitt des Förderspalts 82 vollständig ausgefüllt ist. Damit wird der Teigling nicht nur mit vorbestimmtem Quer- und Längsschnitt, sondern gleichzeitig auch mit exakter Ausrichtung aus der Umformeinrichtung 42 abgegeben.

Bei der in den Figuren 9 und 10 gezeigten Ausführungsform sind die relativ zueinander bewegten Oberfläche von Segment-Förderbändern 90, 92 gebildet, die aus einer Vielzahl identischer Profilsegmente 94 bestehen, welche - vorzugsweise auswechselbar - mittels nicht näher dargestellten Befestigungslaschen auf einer Rollenkette 96 montiert sind. Die Rollenketten 96 laufen über endseitige Umlenkrollen 98. Mit den Pfeilen 100, 102 sind die Bewegungsrichtungen der Segment-Förderbänder 90, 92 bezeichnet. Es ist ersichtlich, daß bei der in den Figuren 9 und 10 gezeigten Ausführungsform die Segment-Förderbänder gegeneinander verlaufen, wobei durch die Größe der Pfeile die unterschiedlichen Bewegungsgeschwindigkeiten angedeutet sind. Die Transportrichtung entspricht derjenigen Laufrichtung des Segement-Förderbandes 90 mit der größeren Laufgeschwindigkeit 100. Die in den Figuren 9 und 10 gezeigte Ausführungsform zeichnet sich durch eine besonders kurze Baulänge aus.

Die Profilsegmente 94 haben im wesentlichen Leistenform. Sie sind bei der Ausführungsform gemäß Fig. 9 und 10 sämtlich identisch gestaltet, das heißt in jedes Profilsegment 94 ist eine identische Ausnehmung 104 eingearbeitet, so daß der Umform- und Förderspalt mit der Breite F symmetrisch zur Berührungsebene 106 ausgebildet wird. Die Breite F entspricht der anzustrebenden Länge des zu formenden Teiglings.

Es soll bereits an dieser Stelle hervorgehoben werden, daß die identische Gestaltung der Profilsegmente 94 keine unabdingbare Voraussetzung ist. Es ist vielmehr auch möglich, lediglich die Profilsegmente eines Segment-Förderbandes 90 oder 92 identisch auszubilden, wobei dann allerdings im Umform- und Förderspalt 82 die Anordnung so getroffen sein soll, daß sich die einander zugewandten Oberflächen der Segmente zu den gewünschten Längs-Querschnitt des herzustellenden Teiglings ergänzen.

In der Darstellung gemäß Fig. 9 und 10 sind die Profilsegmente 94 schematisiert so dargestellt, daß sie im Bereich der Umform- und Förderstrecke UFS mit planparallelen Flächen aneinander liegen. Eine Variante hierzu ist in Fig. 11 gezeigt. Die Segmente sind mit 194 bezeichnet und sie greifen mit ihren vorderen bzw. hinteren Flächen 108 bzw. 110 profilartig ineinander. Bei der Ausführungsform gemäß Fig. 11 sind diese Profilflächen von konvex- bzw. konkavgekrümmten Flächen gebildet. Diese Weiterbildung hat den vorteilhaften Effekt, daß die auf die Teigportion 112 an einer bestimmten Stelle einwirkenden Umformkräfte auch auf die benachbarten Segmente 194a und 194b weitergegeben werden können. Dadurch kann die durch den Pfeil in Fig. 11 angedeutete Walkarbeit während des Transports durch die Umformeinrichtung 42 noch verstärkt werden, was der Qualität des Teiglings zugute kommt. Schwankungen der Teiglingsmasse werden erfindungsgemäß dadurch kompensiert, daß die Leisten-Segmente im Mittelbereich mehr oder weniger stark ausweichen können. Die Länge F des Teigstrangs ändert sich dadurch nicht.

Die Ausgestaltung gemäß Fig. 11 unterscheidet sich von der Ausführungsform gemäß Fig. 9 zusätzlich noch dadurch, daß lediglich ein angetriebenes Segment-Förderband 190 vorgesehen ist, während die Gegenfläche 192 statisch ist.

Um den Druck auf die Teigportion 112 beim Durchlaufen der Umform- und Förderstrecke UFS allmählich aufzubauen, ist es von Vorteil, die Segment-Förderbänder so zu führen, daß sich die Segmente erst nach einer längeren Einlaufstrecke ES vollständig berühren. Diese Einlaufstrecke ES ist vorzugsweise variabel.

Die Ausführungsform gemäß Fig. 12 unterscheidet sich von den vorstehenden Ausführungsformen noch dadurch, daß einem, nämlich dem oberen Segment-Förderband 290 weitere Umlenkrollen 298 zugeordnet sind, so daß ein verbreiterter Einlaufspalt 114 entsteht. Dieser verbreiterte Einlaufspalt stellt sicher, daß beim Aufgeben der Teigportionen das Eindringen von Teig zwischen einzelnen Segmenten nicht mehr auftritt. Die Profilsegmente 94, 194 bestehen vorzugsweise aus Stahl, Aluminium oder Kunststoff, da diese Materialien den hygienetechnischen Anforderungen in einem Bäckereibetrieb am besten genügen.

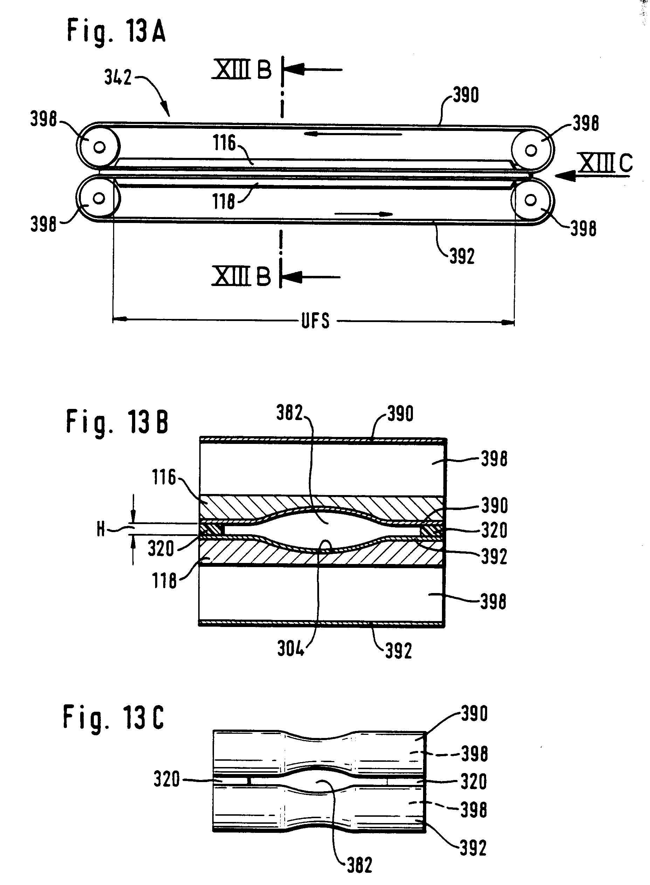

Eine weitere Ausführungsform der Umformeinrichtung in Form eines sogenannten Langrollers ist in den Figuren 13A bis 13C gezeigt:
Die Ausführungsform gemäß Fig. 13 unterscheidet sich von den vorstehend beschriebenen Ausführungsformen dadurch, daß die relativ zueinander bewegten Transport- und Walkoberflächen von Förderbändern 390, 392 gebildet sind, die über Umlenkrollen 398 geführt sind. Die Förderbänder 390, 392 stützen sich im Bereich der Umform- und Förderstrecke UFS jeweils auf einer Formplatte 116 bzw. 118 ab, die dem Querschnitts- und Längsschnitt-Profil des herzustellenden Teiglings entsprechend profiliert ist. Die Förderbänder bestehen vorzugsweise aus textilem Material oder einem geeigneten Kunststoff, so daß sie sich an die Oberfläche der Formplatten 116, 118 satt anschmiegen können. Damit dies insbesondere im Bereich des Austritts aus der Umformeinrichtung 342 der Fall ist, sind auch die Umlenkrollen 398 entsprechend profiliert, was aus der Fig. 13C deutlich hervorgeht.

Als Material für die Formplatten 116, 118 kann Kunststoff, Metall aber auch sogar Holz Verwendung finden.

Die Besonderheit der Ausführungsform gemäß Fig. 13 besteht darin, daß Maßnahmen ergriffen sind, um Gleitreibungsabrieb zwischen den relativ zueinander bewegten Oberflächen, das heißt zwischen den gegensinnig angetriebenen Gurten 390, 392 zu minimieren. Aus diesem Grunde sind im Bereich der Umform-und Förderstrecke UFS seitliche leistenförmige Kunststoff-Streifen 320 vorgesehen, deren Querschnittsabmessungen so gewählt sind, daß der von den Kunststoff-Streifen 320 und den sich an den Profil-Ausnehmungen 304 anschmiegenden Förderbändern 390, 392 eingeschlossene Querschnitt dem Längsschnitt des zu erzeugenden Teiglings entspricht. Mit anderen Worten, die Höhe H der Kunststoff-Streifen 320 entspricht im wesentlichen dem Durchmesser der Teiglinge an den seitlichen Enden. Auf diese Weise bestimmt der Kunststoff-Gleitstreifen 320 die Endlänge des Teigstrangs. Gleichzeitig kann der Kunststoff-Gleitstreifen 320 dazu genutzt werden, die Bauhöhe der Formplatten 316, 318 zu reduzieren.

Der vorstehend beschriebene Kunststoff-Gleitstreifen 320 kann selbstverständlich auch bei anderen Ausführungsformen beispielsweise nach den Figuren 9 bis 12 Verwendung finden. Auch hier wird der Vorteil erzielt, daß gleitreibungsbedingter Abrieb an den Segmenten minimiert wird und die Ausnehmungen in den Segmenten kleinvolumiger gehalten werden können.

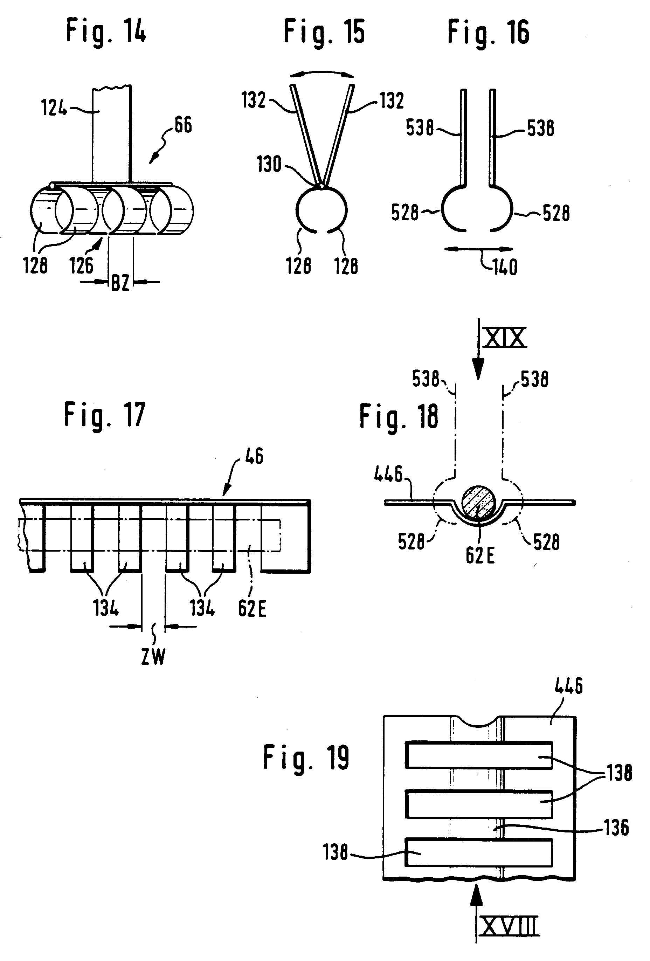

In den Figuren 14 bis 16 sind Ausgestaltungen von Greiferköpfen 66 dargestellt, mit 124 ist ein Halteabschnitt bezeichnet, der eine Zangenkörperanordnung 126 trägt. Diese besteht aus zumindest einer Zange 128 mit bogenförmig gekrümmten Zangenschenkeln. Bei der Ausführungsform gemäß Fig. 14 sind drei derartiger Zangen parallelgeschaltet.

Die Zangenschenkel 128 haben bei der Ausführungsform gemäß Fig. 15 einen Drehpunt 130 und sie setzen sich auf der anderen Seite des Dreh- bzw. Gelenkpunkts 130 in jeweils einem Betätigungsschenkel 132 fort. Wenn diese Betätigungsschenkel - wie mit dem Doppelpfeil gemäß Fig. 15 angedeutet - aufeinanderzu bewegt werden - öffnet sich die Zange 128 und der Greifer kann von oben das in Fig. 17 mit strichpunktierter Linie angedeutete Ende 62E übergreifen.

Damit die Teigstrangenden 62E von den Zangenschenkeln 128 allseitig umschlossen werden können, ist die Teigstrangauflage zunmindest im Bereich der seitlichen Ränder - wie in Fig. 17 gezeigt - bereichsweise derart unterbrochen, daß die Zangenschenkel 128 zwischen Materialstege 134 der Auflagefläche bzw. Auflagemulde für den Teigstrang treten können. Mit anderen Worten, die Breite ZW des Freiraums zwischen den Materialstegen 134 ist geringfügig größer als die Breite BZ der Zangenschenkel 128.

In Fig. 19 ist eine Variante einer Teigstrangauflage bzw. eine alternative Gestaltung der Seitenbereiche dieser Auflage gezeigt. Die mit dem Bezugszeichen 446 bezeichnete Auflage ist beispielsweise von einem Blechteil gebildet, das entlang der Mittel-Längsachse eine tiefgezogene Mulde 136 aufweist. Zumindest im Bereich der seitlichen Enden sind rechteckförmige Ausstanzungen 138 eingebracht, durch die die Zangen 128 des Greifers 66 hindurchtreten können, so daß der in der Mulde 136 liegende Teigstrang von den Zangenschenkeln 128 vollständig umgeben werden kann.

Unter Bezug auf die Figuren 16 und 18 ist noch eine Abwandlung der Greifer dargestellt. In diesem Fall sitzen die mit 528 bezeichneten Zangenschenkel an parallel zueinander verlaufenden Halteschenkeln 538, die abweichend von der Ausführungsform gemäß Fig. 15 zum Öffnen der Zangenschenkel 528 in Parallelausrichtung zueinander auseinanderbewegt werden. Dies ist mit dem Doppelpfeil 140 angedeutet. In Fig. 18 ist mit gestrichelten Linien die Stellung des Greiferkopfs im geöffneten Zustand der Zangen unmittelbar nach dem Einfahren in die Teigstrangauflage 446 dargestellt.

Mit dem vorstehend beschriebenen Aufbau der Brezel-Formanlage läßt sich bei weitestgehender Schonung des Teiglings ein Höchstmaß an Automatisierung erzielen. Für die Anlage gemäß Fig. 1 ist lediglich eine Person erforderlich, wobei allerdings in diesem Fall die Belaugung und die Besalzung und gegebenenfalls die Einbringung eines weiteren Schnitts in das Mittelstück des Brezel-Rohlings noch von Hand durchgeführt wird. Auch ist im Falle der Ausführungsform gemäß Fig. 1 der Transport aus der Gärzone zum Backofen manuell durchzuführen.

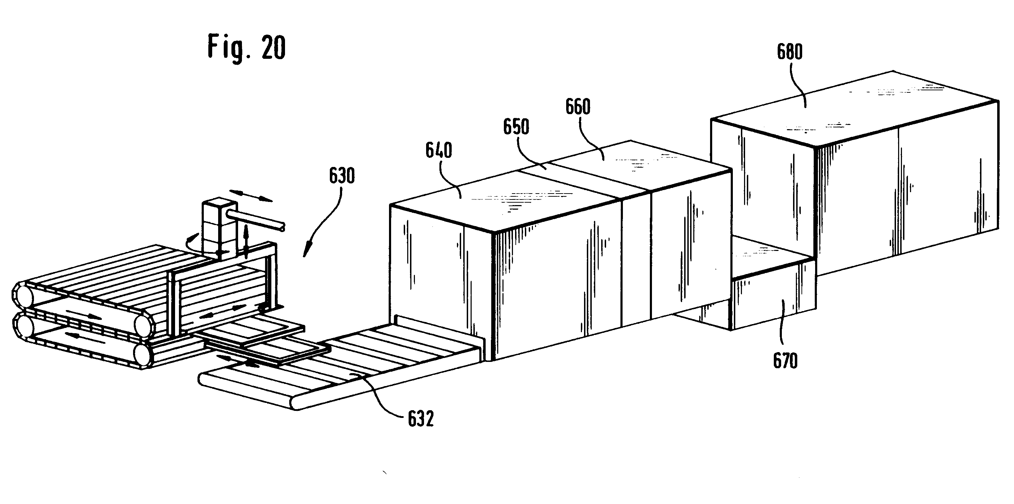

Die Ausführungsform gemäß Fig. 20 unterscheidet sich von der vorstehend beschriebenen Anlage dadurch, daß die Brezelherstellung vollkommen automatisch abläuft.

Zu diesem Zweck ist als Transportmittel für die Brezel-Rohlinge anstelle der Backbleche 32 ein Förderband 632 vorgesehen, das getaktet nicht nur die Brezel-Formstation 630, sondern auch sukzessive einen Gärschrank 640, eine Klimazone 650, eine Kühlvorrichtung 660, eine Belaugungsstation 670 und den eigentlichen Backofen 680 durchläuft. Die Verweildauer im Gärschrank beträgt etwa 45 Minuten bei 45°C und 90% Luftfeuchtigkeit. In der Klimazone 650 beträgt die Verweildauer lediglich etwa 5 Minuten. In dieser Zone wird durch Luftzufuhr verhindert, daß die Brezeln Kondensat ansetzen.

Anschließend läuft das Förderband mit darauf befindlichen Brezel-Rohlingen über eine Zeitdauer von etwa 15 Minuten durch die Kühlvorrichtung, in der etwa 2°C herrschen.

Nach dem Durchlaufen der Kühlvorrichtung 660 werden die Brezel-Rohlinge durch die Lauge gezogen. Anschließend werden die Rohlinge gesalzen und gegebenenfalls mit einem Schnitt im Bereich des Mittelstücks versehen. Gebacken werden die Brezel schließlich mit einer Verweildauer von 15 Minuten bei 240°C im Backofen 680. Am Austritt des Ofens 680 fallen die gebackenen Brezeln in nicht näher dargestellte Transportbehälter.

Die unterschiedlichen Verweilzeiten in den einzelnen Zonen der Brezel-Backanlage werden dadurch erzielt, daß die Durchlaufstrecken in diesen Zonen entsprechend gewählt werden.

Mit der vorstehend beschriebenen Backstraße ergibt sich der besondere Vorteil, daß lediglich eine einzige Bedienungsperson für die Überwachung der Backstraße notwendig wird. Der Arbeitsaufwand bei der Brezelherstellung reduziert sich mit dieser Anlage auf etwa 20% des Aufwandes bei handwerklicher Herstellung.

Selbstverständlich sind Abweichungen von den gezeigten und beschriebenen Ausführungsformen der Brezel-Formanlage möglich, ohnen den Grundgedanken der Erfindung zu verlassen. So kann beispielsweise die Ablage der frisch geschlungenen Brezel-Rohlinge auf der Zwischenlagerfläche so gelöst werden, daß die Brezel-Schlingauflage zusammen mit dem Haltekopf 74, das heißt der Lineareinheit entlang der Achse Z sukzessive immer um einen Brezelabstand weiterbewegt wird. Auch ist es möglich, anstelle der Auflageflügel 60R und 60L schwenkbar gelagerte Förderbänder zu verwenden, die taktweise um einen Brezelabstand vorgeschoben werden und nach voller Belegung nach unten weggeklappt werden, um die gesamte Brezel-Rohling-Reihe auf das Backblech bzw. auf das Förderband abzulegen.

Um die Aufgabe der Teigportion auf den Langroller zu erleichtern, kann eine alternative Ausführungsform darin bestehen, das obere Transportband bzw. Segment-Förderband etwas zu verkürzen. Auch ist es möglich, anstelle von zwei Textil- oder Kunststoff-Transportbändern, die relativ zueinander bewegt sind, lediglich ein einziges, derartiges bewegtes Band vorzusehen, das entweder mit einer profilierten oder einer glatten Gegenfläche zusammenwirkt.

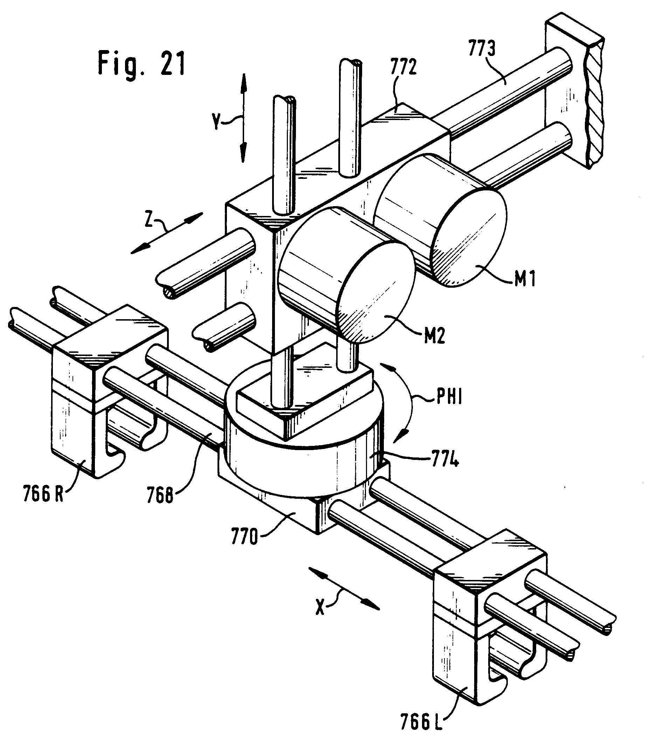

In Fig. 21 ist eine weitere Variante der Greiferaufhängung gezeigt, die sich von der Ausführungsform gemäß Fig. 1 dadurch unterscheidet, daß eine modifizierte Kinematik für die Bewegung in Y- und Z-Richtung Anwendung findet. Die mit 768 bezeichnete Traverse trägt die Greifarme 766R und 766L und ist ihrerseits von einem Drehkopf 770 gehalten, der an einem Vertikalschlitten 774 sitzt. Der Vertikalschlitten 774 ist zur Höhenverstellbarkeit (Achse Y) an einem Trägerkopf 772 gehalten, der seinerseits entlang der horizontalen Achse Z entlang einer Querführung 773 verfahrbar ist. Mit PHI ist der Verschwenkwinkel bezeichnet, über den die Traverse 768 zur Vollführung der Brezel-Schlingbewegung bewegt werden kann. Mit M1 und M2 sind Antriebsmotoren angedeutet, über die die translatorischen Bewegungen in Z- und Y-Richtung einleitbar sind.

Auch bei dieser Ausführungsform sind die Greifer 766R und 766L mittels eines beispielsweise im Bauteil 770 aufgenommenen Motors gegensinnig in X-Richtung bewegbar. Der hierfür erforderliche Hub beträgt beispielsweise 200 mm. Der Vertikalhub liegt bei ca. 100 mm und der Horizontalhub (Z-Achse) bei ca. 300 mm.

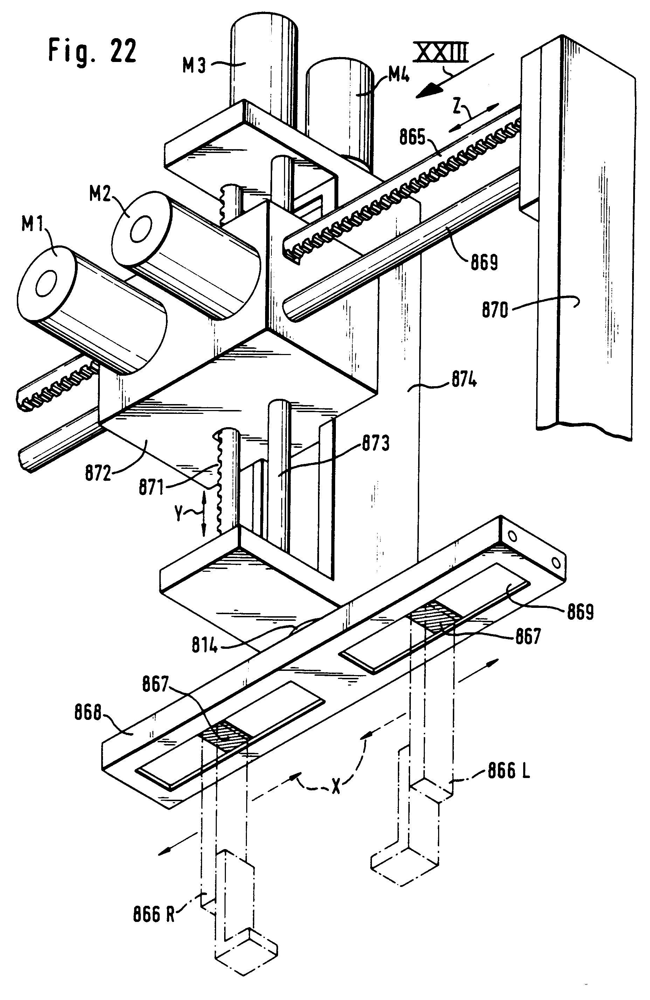

Eine etwas modifizierte Ausgestaltung der Traversenhalterung wird nachfolgend in Bezug auf die Figuren 22 bis 27 näher erläutert. Die mit 868 bezeichnete Traverse hat Führungen 869 für Trägerplatten 867, an denen strichpunktiert angedeutete Greifer 866R und 866L befestigt sind. Diese Greifer sind - wie mit dem Pfeil X angedeutet - gegensinnig antreibbar, wie dies vorstehend bereits im Zusammenhang mit dem Brezel-Schlingvorgang beschrieben wurde.

Die Traverse 868 ist drehbar am Vertikalschlitten 874 gelagert, was nachfolgend im einzelnen näher beschrieben werden soll. Der Vertikalschlitten 874 ist über eine Führung 873 an einem Trägerkopf 872 gehalten, wobei die Führung in Y-Richtung verläuft. Parallel zur Führung 873 ist eine Zahnstange 871 vorgesehen, die sich durch eine Durchgangsöffnung im Trägerkopf 872 erstreckt.

Der Trägerkopf 872 ist seinerseits über eine Führung 869 in Z-Richtung bewegbar an einem nicht näher dargestellten Gestell gehalten, von dem lediglich eine Säule 867 angedeutet ist. Parallel zur Führung 869 ist eine Zahnstange 865 vorgesehen, die sich von der Säule 867 zu einer dazu parallelen, weiteren Säule erstreckt.

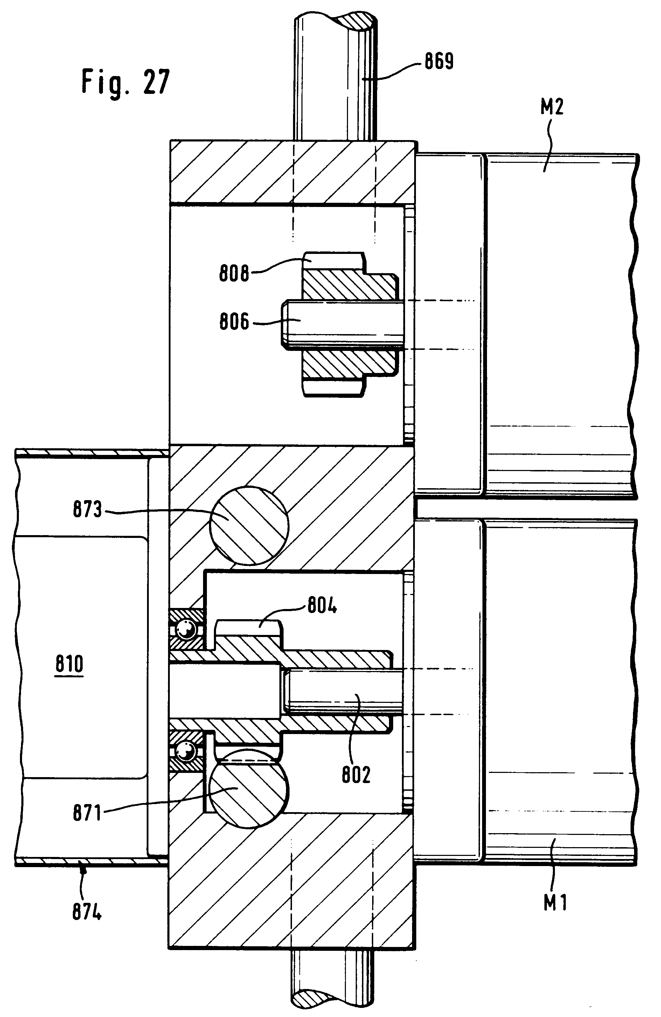

Der Trägerkopf 872 trägt auf der dem Vertikalschlitten 874 abgewandten Seite zwei Antriebsmotoren M1 und M2, von denen der eine Motor M1 ein Ritzel antreibt, das mit der Zahnstange 871 in Kämmeingriff steht. Der andere Motor M2 treibt ein Ritzel an, das mit der Zahnstange 865 zusammenwirkt, um die Bewegung des Trägerkopfes 872 in Z-Richtung einzuleiten. Einzelheiten sind der Fig. 27 entnehmbar. Man erkennt, daß der Motor M1 auf seiner Ausgangswelle 802 ein Ritzel 804 trägt, das mit der vertikalen Zahnstange 871 in Eingriff steht. Der Motor M2 trägt auf seiner Ausgangswelle 806 ein Ritzel 808, das mit der darüberliegenden Zahnstange 865 in Eingriff steht, welche parallel zur Führung 869 verläuft.

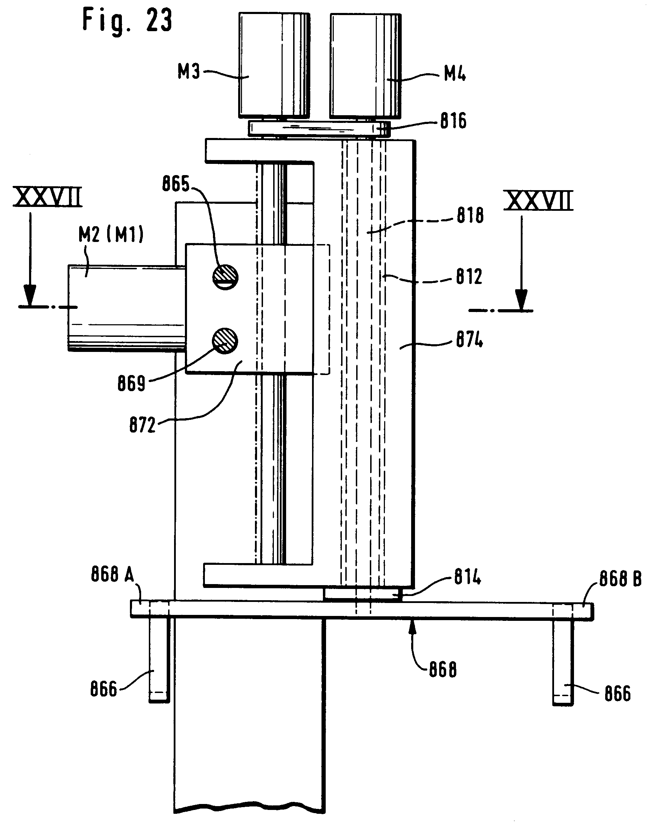

Der Fig. 27 sind Einzelheiten des Aufbaus des Vertikalschlittens 874 entnehmbar. Man erkennt einen Hohlraum 810, in dem ein Getriebe zur Übertragung der Antriebskraft auf die Traverse einerseits und auf die Greifer 866 andererseits aufgenommen ist. Dieses Getriebe wird nachfolgend anhand der Figuren 23 bis 26 näher beschrieben.

Im Vertikalschlitten 874 ist eine Hohlwelle 812 aufgenommen, die fest mit einem Drehteller 814 gekoppelt ist, an dem die Traverse 868 sitzt. Die Hohlwelle 812 wird auf der Oberseite des Vertikalschlittens 874 über einen Zahnriemen 816 von einem Motor M3 angetrieben, über den somit die Verdrehbewegung (Freiheitsgrad PHI) auf die Traverse 668 eingeleitet werden kann.

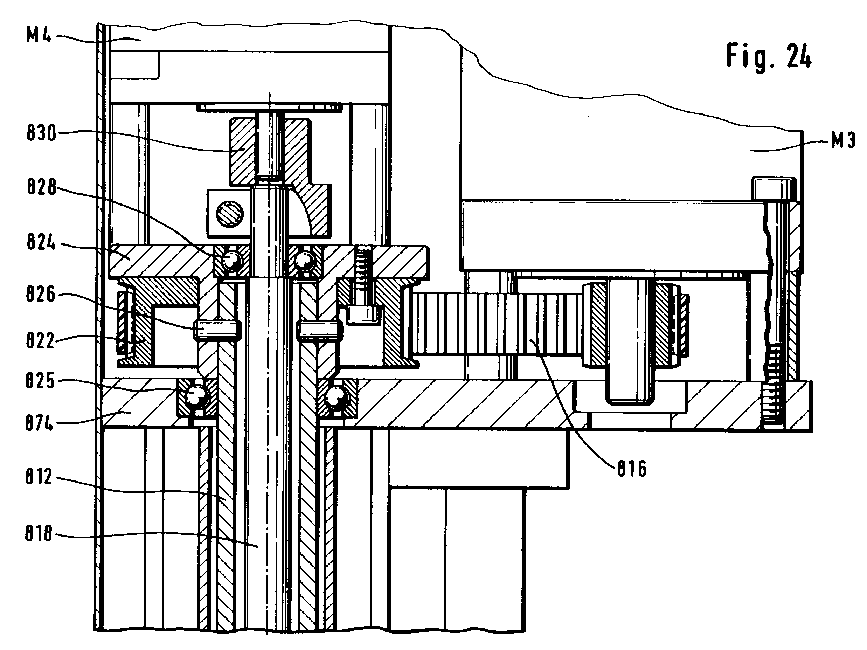

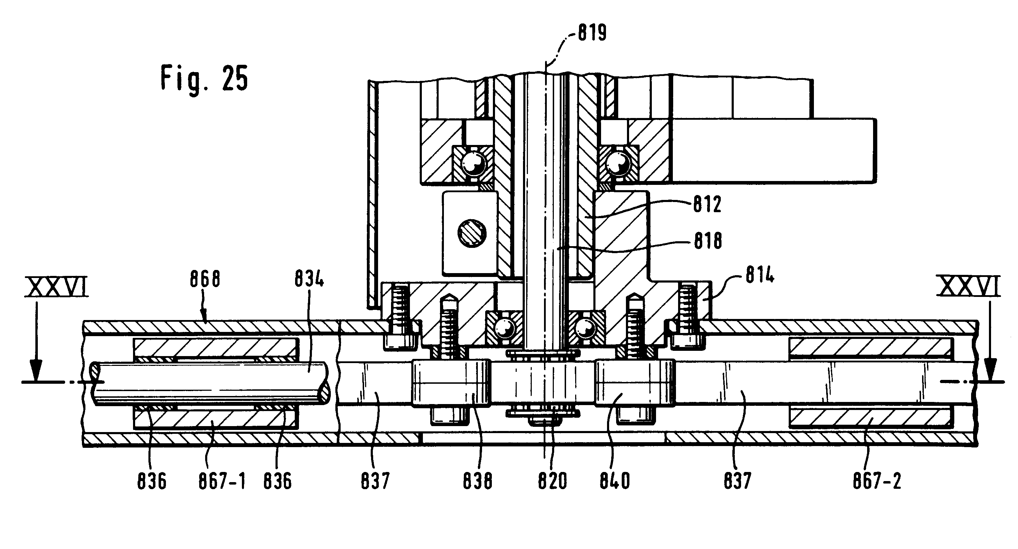

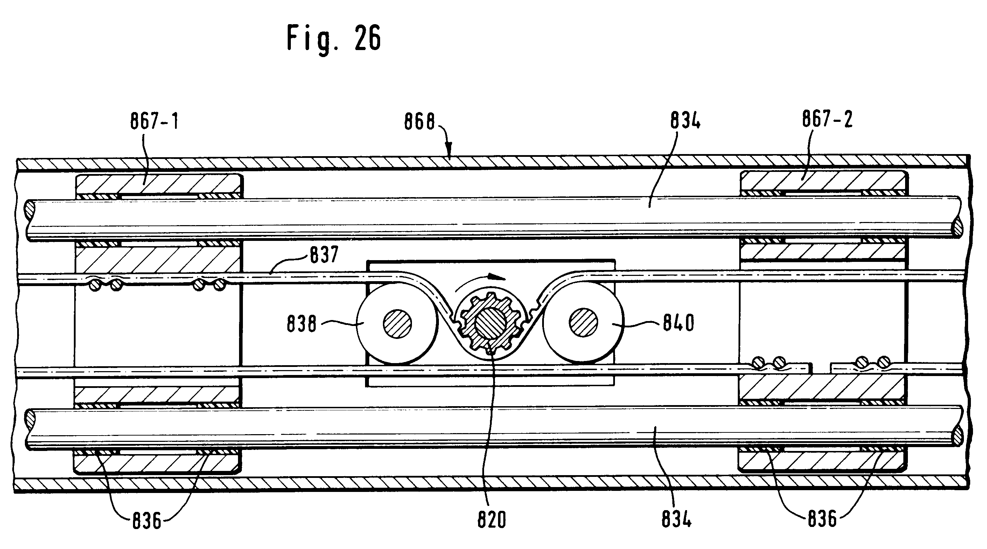

In der Hohlwelle 812 verläuft zentrisch eine Innenwelle 818, die mit einem vierten Motor M4 gekoppelt ist. Das dem Motor M4 abgewandte Ende der Innenwelle 818 treibt ein in der Traverse 868 drehbar gelagertes Riemenscheibenrad 820 an, (vgl. Fig. 25 und 26) durch dessen Drehbewegung die Greiferträger 867 antreibbar sind. Einzelheiten der Kraftübertragung sind den Figuren 24 bis 26 entnehmbar.

Fig. 24 zeigt die Kraftübertragung vom Motor M3 über den Zahnriemen 816 zu einer Zahnscheibe 822, die fest mit einer Nabenscheibe 824 verbunden ist. Über Radialstifte 826 erfolgt eine drehfeste Verbindung mit der Hohlwelle 812, die über Lager 824 im Vertikalschlitten 874 gelagert ist.

Die Nabenscheibe 824 lagert ihrerseits über das Radiallager 828 die Innenwelle 818, welche vom koaxialen Motor M4 über die Kupplung 830 antreibbar ist.

Fig. 25 ist entnehmbar, daß die Hohlwelle 812 auf der dem Motor M3, M4 abgewandten Seite über ein Kupplungsstück mit dem Drehteller 814 gekoppelt ist, der über eine Schraubverbindung die Traverse 868 trägt. Man erkennt aus den Darstellungen der Figuren 25 und 26, daß in der Traverse Führungsstangen 834 aufgenommen sind, die über Gleitführungen 836 die Trägerplatten 867 möglichst reibungsarm in X-Richtung führen. Fig. 26 zeigt die Kopplung der Trägerplatten 867 mit dem Treib- bzw. Zahnriemen 836.

Dieser wird - wie der Fig. 26 am besten entnehmbar ist - mit einem möglichst großen Umschlingungswinkel um das Zahnrad 820 geführt. Zu diesem Zweck sind Umlenkrollen 838 und 840 vorgesehen. Das eine Trum ist mit der Trägerplatte 867-1 gekoppelt, während das andere Trum an der Trägerplatte 867-2 befestigt ist. Auf diese Weise bildet die Trägerplatte 867-2 das Verbindungsglied für die beiden Enden des Zahnriemens 836.

Nicht näher dargestellt sind Umlenkscheiben, die im wesentlichen den gleichen Durchmesser wie die Scheiben 838, 840 haben und an den äußeren Enden der Traversenarme 868A, 868B gelagert sind. Es ist ersichtlich, daß bei Drehung der Zahnriemenscheibe 820 beispielsweise in Uhrzeigersinn die Trägerplatte 867-2 gemäß Fig. 26 nach rechts und synchron dazu die Trägerplatte 867-1 nach links bewegt wird. Bei Antrieb in entgegengesetzte Richtung bewegen sich die Trägerplatten gegensinnig aufeinander zu.

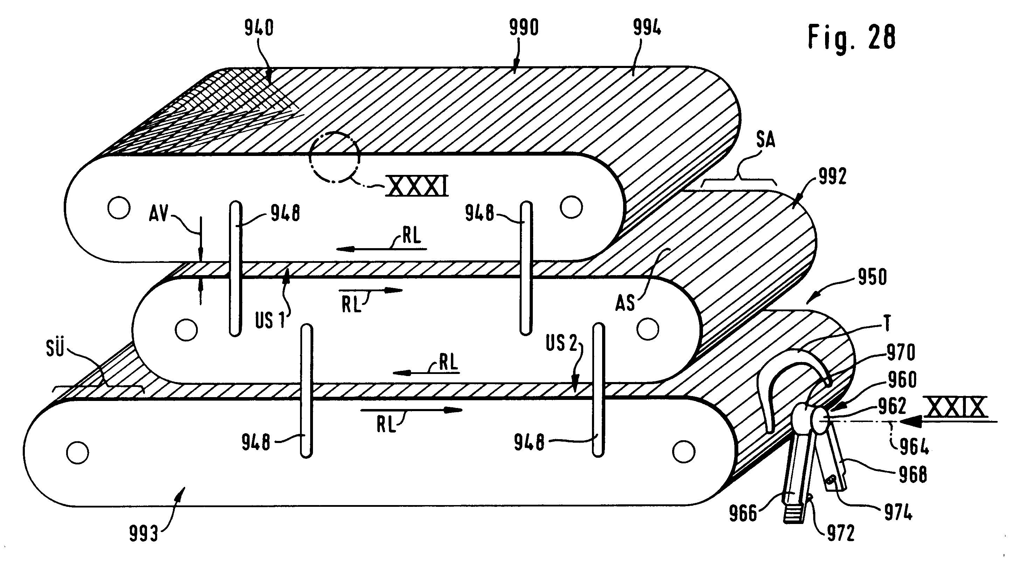

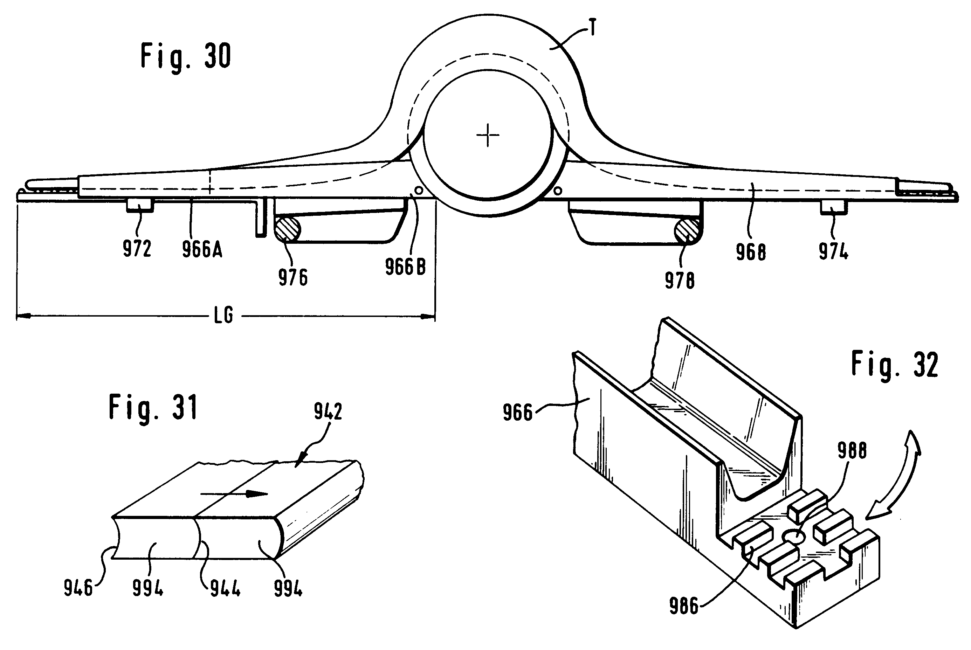

In Fig. 28 ist eine modifizierte Variante einer Teigling-Ausrollvorrichtung gezeigt. Zur Funktion kann - um Wiederholungen zu vermeiden - auf die Figuren 9 bis 13 und die zugehörige Beschreibung verwiesen werden. Auch bei dieser Ausführungsform wird der als Klumpen aufgegebene Teigling (Aufgabestelle bei AS) in einen Förderspalt zwischen zwei relativ zueinander bewegten Oberflächen auf Endabmessungen ausgewalkt. Die Oberflächen sind wiederum von Segment-Förderbändern 990, 992 gebildet, wobei jedoch zwei Umformstrecken, nämlich die Strecke US1 und die Strecke US2 hintereinander geschaltet sind. Mit anderen Worten, den Segment-Förderbändern 990, 992 ist ein drittes Segment-Förderband 993 nachgeschaltet. Mit RL sind die Laufrichtungen der Segment-Förderbänder angedeutet und man erkennt, daß wiederum in den Umformspalten eine gegensinnige Bewegungsrichtung der einander zugewandten Oberflächen vorliegt. Die Segment-Förderbänder 990 und 992 sind erneut zur Bereitstellung einer Aufgabestrecke SA axial zueinander versetzt. Entsprechendes gilt für die Förderbänder 992 und 993, so daß eine Übergabestrecke SÜ gebildet wird, auf die der von der Strecke US1 kommende, vorgeformte Teigling herabfällt. Mit dünnen Linien ist am Segment-Förderband 990 ein Vertiefungsmuster 940 angedeutet. Diese Vertiefungen oder Rillen sind in die Lamellen 994 eingeformt oder eingearbeitet und sie verlaufen schräg nach außen, so daß der Teigling bei der Umformung allmählich seitlich in die Länge gezogen wird. Diese Rillen oder Vertiefungen sind insbesondere dann sehr einfach herstellbar, wenn Kunststofflamellen verwendet werden. Man erkennt, daß die Lamellen bzw. Leisten 994 - siehe auch Fig. 31 - so ausgebildet sind, daß sie im Geradeauslauf eine durchgehende Oberfläche 942 ausbilden. Fig. 31 ist darüberhinaus entnehmbar, daß die Lamellen mit ihren vor- und nachlaufenden Stirnflächen 944 und 946 formschlüssig ineinander greifen, wodurch die Beanspruchbarkeit, insbesondere gegenüber Biegebeanspruchung erhöht werden kann. Das mittlere Band 992 läuft mit einer Geschwindigkeit, die nur einen Bruchteil, vorzugsweise 1/5 bis 1/8 der Geschwindigkeit der anderen Bänder 990 und 993 ausmacht.

Wenngleich dies in den Figuren nicht näher dargestellt ist, können selbstverständlich auch zusätzliche Maßnahmen ergriffen sein, um die Lamellen 994 durch seitliche und/oder mittlere Abstützungen so zu führen, daß in bestimmten Zonen des Ausrollers mehr oder weniger Druck auf den Teig ausgeübt werden kann. Hier kann beispielsweise ein wellenförmiger Druck ausgeübt werden oder aber der Druck in der Auslaufzone allmählich reduziert werden.

Mit 948 sind Vertikalführungen bezeichnet, über die der Vertikalabstand AV im Transport- und Förderspalt variierbar ist. Durch diese Höhenverstellung kann bewirkt werden, daß der Teigling-Strang dünner oder dicker eingestellt wird. Es ist auch möglich, die Ansteuerung für die Verstellung des Vertikalabstandes abhängig von Signalen zu gestalten, die die Länge des ausgewalkten Teiglings am Auslauf 950 wiedergeben. Sollte sich beispielsweise eine zu geringe Länge des Teiglings T im Bereich 950 einstellen, so kann einer der beiden Spalten AV oder auch beide gesteuert verkleinert werden.

Mit dem Bezugszeichen 960 ist eine Einrichtung bezeichnet, mit der eine Feinausrichtung des fertig gerollten Teiglings T derart erfolgt, daß der Teigling exakt zentiert zur Symmetrieebene der Greiferanordnung abgelegt wird. Zu diesem Zweck ist ein Auffangrad 962 vorgesehen, das einen nicht näher dargestellten Drehantrieb hat und dessen Achse 964 in der Symmetrieebene der Greifereinrichtung, d. h. der Traverse liegt. Dem Auffangrad 960 sind zwei Auffangrinnen 966, 968 zugeordnet, die schwenkbar um eine zur Achse 964 parallele Achse derart angeordnet sind, daß sie tangential in die Oberfläche 970 des Auffangrades 962 übergehen. Der Querschnitt der Auffangrinne 966 ist am besten aus der Fig. 32 ersichtlich.

Mit 972 und 974 sind vorzugsweise kapazitiv, d. h. berührungslos arbeitende Sensoren bezeichnet, mit denen die Lage der Teigstrangenden erfaßt bzw. gemessen werden können, wenn der Teigstrang nach Verlassen des Austritts 950 der Umformeinrichtung auf das Auffangrad 962 fällt. Um unerwünschte Verformungen des Teigstrangs möglichst gering zu halten, ist das Profil des Auffangrades dem Querschnitt des Teigstrangs im mittleren Bereich angepaßt.

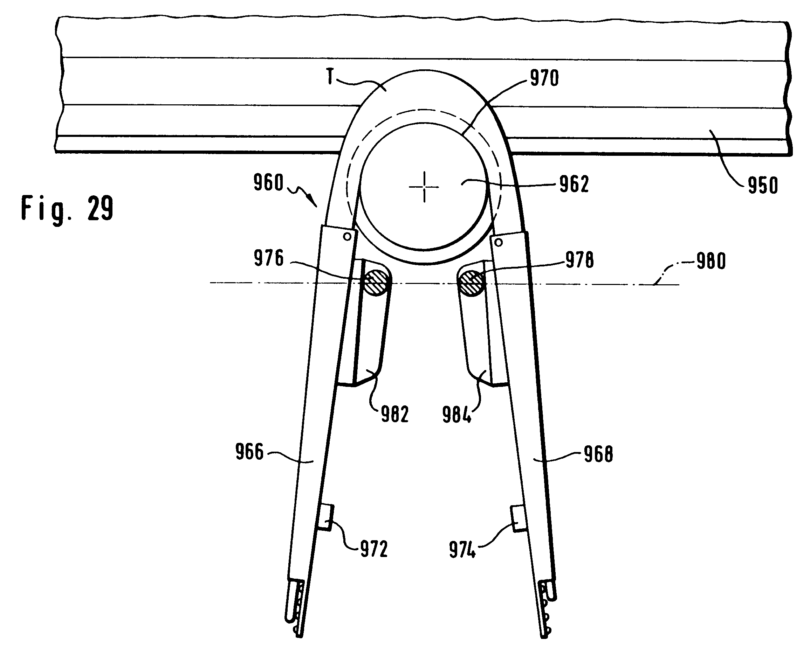

Fig. 29 zeigt in vergrößertem Maßstab die Position des Teigstrangs T und der Auffangrinnen 966, 968 nach dem Auftreffen auf das Auffangrad 962. Der Teigstrang befindet sich hier - übertrieben dargestellt - nicht exakt ausgemittelt auf dem Rad. Das gemäß Fig. 29 linke Ende hängt geringfügig tiefer als das rechte.

In diesem Fall wird zunächst das Auffangrad 962 in eine Richtung durch eine nicht näher dargestellte Antriebseinrichtung gedreht, bis einer der Sensoren 974 frei wird. In diesem Moment kehrt die Antriebseinrichtung den Drehsinn um und ein Zähler summiert die Bewegungsschritte des Antriebs für das Auffangrad 962 so lange auf, bis der andere berührungslose Fühler frei wird. In diesem Moment wird der Drehsinn der Antriebseinrichtung und damit des Auffangrades 962 erneut umgekehrt und das Rad wird um die halbe Schrittzahl zurückbewegt, so daß der Teigstrang genau mittig bzw. ausgemittelt über dem Auffangrad 962 hängt. Es ist somit wesentlich, daß sich das Rad dann dreht, wenn einer der berührungslosen Fühler durch den Teigstrang angesprochen wird, und zwar so lange, bis der Fühler frei wird und der auf der gegenüberliegenden Seite befindliche Fühler anspricht.

Nach dem Ausrichtvorgang werden die beiden Auffangrinnen 966, 968 nach oben bzw. nach außen geschwenkt, wobei auch hier - ähnlich wie beim Antrieb der Greifer - eine gegensinnige Steuerbewegung Anwendung findet. Hierzu werden Steuerbolzen 976, 978 entlang einer Achse 980 gegensinnig auseinander bzw. zusammen gefahren. Die Steuerbolzen arbeiten mit einer Kulissenführung 982 bzw. 984 zusammen, so daß die Auffangrinnen 966, 968 allmählich in eine horizontale Lage gebracht werden, die in Fig. 30 gezeigt ist. Man erkennt, daß der Gelenkpunkt der Auffangrinnen so gelegt ist, daß der mittlere Abschnitt des Teiglings T erhaben von der Auflagefläche der Auffangrinnen vorsteht.

Auf der linken Seite der Fig. 30 ist eine Abwandlung der Auffangrinne 966 angedeutet, deren Besonderheit darin besteht, daß die Rinne aus zwei Teilen 966A und 966B gebildet ist, welche teleskopierbar aneinander geführt sind. Die Relativverschiebung zwischen den Teilen 966A, 966B wird vorzugsweise über den Steuerbolzen 976 gesteuert, d. h., über die Bewegung des Steuerbolzens 976 wird nicht nur die Winkellage der Auffangrinne 966, sondern auch deren Gesamtlänge LG bestimmt. Dies kann dann von Vorteil sein, wenn die kapazitiv, d. h. berührungslos arbeitenden Sensoren oder Meßvorrichtungen feststellen, daß die Gesamtlänge des Teigstrangs zu kurz ist, um ein problemloses Erfassen der Teigstrangenden durch die Greifer sicherzustellen. In diesem Fall werden die Steuerbolzen 976 abhängig von den Meßsignalen der Sensoren so weit bewegt, bis die Sollänge eingestellt ist. Die Teleskop-Verschiebung erfolgt vorzugsweise ebenso kurvengesteuert.

Schließlich wird anhand von Fig. 32 eine vorteilhafte Ausgestaltung der Enden der Auffangrinnen 966, 968 beschrieben. Man erkennt in diesem Bereich eine Reihe von Noppen 986, die sicherstellen, daß die Teigstrangenden von den Greifern - wie sie unter Bezugnahme auf die Figuren 14 bis 19 erläutert wurden - problemlos erfaßt werden können. Mit 988 ist eine Bohrung zur Aufnahme des Lage- bzw. Positionssensors bezeichnet.

Die Erfindung schafft somit ein Verfahren und eine Vorrichtung zur maschinellen Herstellung von Brezeln, bei dem bzw. bei der nicht nur der eigentliche Schlingvorgang des Teigstrangs, sondern auch die Aufgabe des Teiges und der Abtransport der Brezel-Rohlinge automatisiert gelöst ist. Es wird der Brezel-Schlingstation ein Teigstrang mit kontrollierter Länge und räumlicher Ausrichtung an ein Greiferpaar übergeben, das den erfaßten Teigstrang in einem durchgehenden und zur Symmetrieebene der Brezel spiegelbildlichen Bewegungsablauf zunächst in eine räumliche Schlaufenform zieht, bei der die Enden des Teigstrangs nahe dem "Herz" der zu schlingenden Brezel zu liegen kommen. Nach dem Stillstand der Greifer führen diese eine 360°-Drehbewegung aus und sie werden auf dem kürzesten Weg und synchron nach unten und auseinander gefahren, bis sie über den Soll-Andruckpunkten der Teigstrangenden am Mittelstück liegen. Dort geben die Greifer den Teigstrang frei und drücken die Teigstrangenden mittels einer aufeinanderfolgenden Hub- und Senkbewegung an das Mittelstück der Brezel an. Während die Greifer in die Ausgangsposition zur erneuten Aufnahme des nachfolgenden Teigstrangs weiterbewegt werden, wird der fertig geformte Brezel-Rohling parallel zu sich selbst unter kurzzeitigem Aufklappen von gelenkig gelagerten Auflageflügeln im freien Fall auf eine darunterliegende Transporteinrichtung gefördert. Die Vorrichtung kommt mit geringem Bauraum aus und benötigt keine Leitbleche, Bürsten, Bügel oder dergleichen, was sich potitiv auf die Wartung und Reinigung der Vorrichtung auswirkt.

## Patentansprüche

1. Verfahren zur maschinellen Herstellung von Brezeln aus einer Teigportion, bei dem:
die Teigportion in einen Teigstrang (62) vorbestimmter Abmessungen umgeformt wird,
der Teigstrang (62) anschließend an den Enden von einem Greiferpaar (66R, 66L) ergriffen und auf einer Auflage unter Ausführung einer translatorischen und rotatorischen 360°-Relativbewegung zwischen Greiferpaar (66R, 66L) und Auflage (48R, 48L) mit einer auf der Auflage im wesentlichen senkrecht stehenden Achse zu einer Brezelform geschlungen wird;
die Greifer (66R, 66L) die Enden des Teigstrangs (62) an das Brezel Mittelstück (62M) andrücken; und
die fertig geschlungene Brezel von der Auflage (48R, 48L) auf ein Transportband (32, 34 übergeben wird, wobei der Teigstrang (62) mit kontrollierter Länge (F) und Ausrichtung an des Greiferpaar (66R, 66L) übergeben wird;
die Greifer (66R, 66L) den erfaßten Teigstrang in einem durchgehenden und zur Symmetrieebene der Brezel spiegelbildlichen Bewegungsablauf entlang eines Bewegungskurve (K1) zunächst in eine Schlaufenform ziehen und die Enden (62E) des Teigstrangs über dem "Herz" der zu schlingenden Brezel positioniert werden, dadurch gekennzeichnet, daß sich das Mittelstück (62M) der Schlaufe vorzugsweise formschlüssig an der Auflage (48R, 48L) bzw. einem der fertigen Brezelform entsprechenden, bogenförmigen Halterungsteil (50) abstützt;
und nach dem Stillstand der Greifer (66) über dem Herz der Brezel diesie die 360°-Drehbewegung ausführen und anschließend die Greifer auf dem kürzesten Weg entlang einer Bewegungskurve (K2) und synchron nach unten und auseinander gefahren werden, bis sie über den Soll-Andruckpunkten der Teigstrangenden am Mittelstück liegen;
die Greifer (66) den Teigstrang freigeben und mittels einer aufeinanderfolgenden Hub- und Senkbewegung die Teigstrangenden (62E) andrücksen, woraufhin die Greifer in die Ausgangsposition zur erneuten Aufnahme des nachfolgenden Teigstrangs weiterbewegt werden, während gleichzeitig
die fertig geformte, rohe Brezel (80) parallel zu sich selbst unter kurzzeitigem Aufkappen von gelenkig gelagerten Flügeln (48R, 48R) der Auflage (48) im freien Fall auf eine darunter liegende Transporteinrichtung (32, 34) gefördert wird.

2. Verfahren nach Anspruch 1**, dadurch gekennzeichnet**, **daß** der Teigstrang der Schlingstation (44) quer zur Durchlaufrichtung (D) einer Backauflage (32; 632) zugeführt wird, und daß die von der Schlingstation kommenden Brezel-Rohlinge (80) in einer Reihe zwischengepuffert werden, deren Ausrichtung senkrecht zur Durchlaufrichtung (D) der Backauflage steht und deren Länge (L) im wesentlichen der Breite (B) der Backauflage (32; 632) entspricht, und daß die Reihe der fertig geschlungenen Brezel-Rohlinge so lange aufgebaut wird, bis eine die Reihe aufnehmende, aus zwei schwenkbar gelagerten Flügeln (60R, 60L) bestehende Puffer-Auflage (60) vollständig belegt ist, woraufhin alle darauf befindlichen Rohlinge (80) simultan auf die darunter befindliche Backauflage (32; 632) abgelegt werden, die dann um einen Takt weitertransportiert wird, wobei vorzugsweise die Backauflage in Form eines Förderbandes (632) eine Backstraße mit hintereinandergeschalteten Gär-, Klima-, Kühl-, Belaugungs- und Besalzungs-, sowie Backzonen durchläuft.

3. Verfahren nach Anspruch 1 oder 2, **dadurch gekennzeichnet**, **daß** zur Herstellung des Teigstrangs eine Teigling-Portion in einen Förderspalt (82) gegeben wird, dessen Breite (F) der Länge des zu erzeugenden Teigstangs entspricht, und daß der Teigling beim Durchlaufen der Förder- und Umformstrecke (UFS)) zwischen den relativ zueinander bewegten Oberflächen (84, 86) einer Streck- und Walkbeanspruchung unterzogen wird, bis er die seitliche Begrenzung des Förderspalts erreicht hat.

4. Vorrichtung zur Durchführung des Verfahrens nach einem der Ansprüche 1 bis 3, mit
einer Einrichtung (42) zur Umformung einer Teigportion in einen Teigstrang (62) vorbestimmter Abmessungen,
einer Brezel-Schlingvorrichtung (44), in der der Teigstrang (62) an den Enden von einem Greiferpaar (66R, 66L) ergriffen und auf einer Auflage (48) unter Ausführung einer translatorischen und rotatorischen 360°-Relativbewegung zwischen Greiferpaar und Auflage mit einer auf der Auflage im wesentlichen senkrecht stehenden Achse zu einer Brezelform geschlungen wird, woraufhin die Greifer (66) die Enden des Teigstrangs an das Brezel-Mittelstück andrücken; und
einer Übergabeeinrichtung für die fertig geschlungene Brezel von der Auflage auf ein Transportband, **dadurch gekennzeichnet**, **daß**
die Einrichtung (42) zur Umformung der Teigportion in einen Teigstrang derart an die Schlingvorrichtung (44) angepaßt ist, daß der Teigstrang (62) am Austritt der Umformeinrichtung mit seinen Enden exakt fluchtend einem Paar von Greifern (66R, 66L) gegenüberliegt,
die an einer über der Umformeinrichtung (42) positionierten Traverse (68) entlang dieser verschiebbar und gegensinnig antreibbar aufgehängt sind, wobei
die Traverse (68) einen separaten Dreh-(PHI) und Hubantrieb (74, Achse Y) hat und zusammen mit letzterem von einem Haltekopf (74) getragen ist, dem ein Linearantrieb (Z) zugeordnet ist, welcher eine auf der den Teigstrang enthaltenden Vertikalebene senkrecht stehende Achse hat; daß
die Auflage (48) für den Brezel-Rohling (80) geringfügig unterhalb des Austritts aus der Umformeinrichtung (42) liegt und so ausgebildet ist, daß der von den Greifern (66) erfaßte Teigstrang zumindest mit seinem Mittelstück (62M) kraft- oder formschlüssig an der Auflage (48) bzw. an einem der fertigen Brezelform entsprechenden, bogenförmigen Halterungsteil (50) abstützbar und der fertig geschlungene Brezel-Rohling (80) parallel zu sich selbst unter kurzzeitigem Aufkappen von gelenkig gelagerten Flügeln (48R, 48L) der Auflage im freien Fall auf eine darunter liegende Transporteinrichtung (32; 632) förderbar ist, und daß
eine Bewegungssteuerung vorgesehen ist, mit der die Bewegungen der Greifer (66) und der Traverse (68) simultan und vorzugsweise unabhängig voneinander einleitbar sind, wobei vorzugsweise
die Transportrichtung in der Teigling-Umformeinrichtung (42) im wesentlichen senkrecht auf der Durchlaufrichtung (D) einer Backauflage (32; 632) steht, und der Transporteinrichtung (32; 632) eine Zwischenspeicher-Auflage (60) vorgeschaltet ist, deren Ausrichtung senkrecht zur Durchlaufrichtung (D) der Backauflage steht und deren Länge (L) im wesentlichen der Breite (B) der Backauflage (32; 632) entspricht.

5. Vorrichtung nach Anspruch 4, **dadurch gekennzeichnet**, **daß** die Schlingauflage (48R, 48L) und/oder die Zwischenspeicher-Auflage (60) einen getakteten Antrieb hat, mit dem die fertig geschlungenen Brezel-Rohlinge (80) sukzessive in eine seitlich zur zuletzt abgelegten Brezel versetzte Lage bringbar ist, bevor die Auflageflügel (48R, 48L) aufgeklappt werden, und daß das schrittweise Versetzen so lange erfolgt, bis die Zwischenspeicher-Auflage (60) vollständig belegt ist, wobei vorzugsweise
der Backauflage (32; 632) ein Schrittantrieb (34) zugeordnet ist, mit der die Backauflage nach dem simultanen Ablagevorgang der Brezel-Rohlinge von der Zwischenspeicher-Auflage (60) um einen Takt weitertransportierbar ist und/oder
die einzelnen Flügel (60R, 60L) der Zwischenspeicher-Auflage (60) jeweils eine Schwenkachse haben, die parallel zur Achse (Z) des Haltekopf-Linearantriebs ausgerichtet und an den einander abgewandten Seitenrändern angeordnet sind, und/oder
in die Auflage (48) für den Brezel-Rohling zumindest bereichsweise eine die Sollform des Brezel-Rohlings wiedergebende Vertiefung (50) eingebracht ist.

6. Vorrichtung nach Anspruch 4 oder 5, **dadurch gekennzeichnet**, **daß** dem rotatorischen Antrieb (70; PHI) für die Greifer-Traverse (68) eine Umsteuereinrichtung zugeordnet ist, mit der der Drehsinn der 360°-Drehbewegung abwechselnd umkehrbar ist, wobei vorzugsweise die Antriebe des Haltekopfs (72) und/oder der Traverse (68) und/oder der Greifer (66) pneumatisch, elektrisch oder hydraulisch arbeiten und/oder
ein schrittmotorbetätigter Antrieb vorgesehen ist, und wobei vorzugsweise
die Backauflage entweder von einem Förderband (632), das vorzugsweise getaktet eine Backstraße mit hintereinandergeschalteten Gär-, Klima-, Kühl-, Belaugungs- und Besalzungs-, sowie Backzonen durchläuft, oder
von einem Backblech (32) gebildet ist, dem ein getakteter Vorschub (34) zugeordnet ist.

7. Vorrichtung nach einem der Ansprüche 4 bis 6, **dadurch gekennzeichnet**, **daß** die Traverse (768; 868) von einem Vertikalschlitten (774; 874) getragen ist, der verschiebbar an einem horizontal bewegbaren Trägerkopf (772; 872) sitzt, an dem zwei Antriebsmotoren (M1, M2) befestigt sind, mit denen die Horizontal- und Vertikalbewegung der Traverse einleitbar ist, wobei vorzugsweise
der Vertikalschlitten (874) in seinem Inneren eine vertikal verlaufende Hohlwelle (812) aufnimmt, über die die Drehantriebsbewegung (PHI) der Traverse (868) einleitbar ist und in der eine Innenwelle (818) verläuft, mit der die Antriebskraft für die gegensinnige Bewegung der Greifer (866) in die Ebene der Traverse (868) übertragbar ist, und/oder
der Antrieb des Vertikalschlittens (874) und des Trägerkopfes (872) mittels einer Zahnstange (865) erfolgt, die mit zugehörigen Antriebsritzeln (804, 808) der Antriebsmotoren (M1, M2) in Kämmeingriff steht, und/oder zur gegensinnigen Bewegung der Greifer (766; 866) ein Riementrieb (836, 820) vorgesehen ist, dessen Antriebsrad (820) in der Drehachse (819) der Traverse (868) sitzt und dessen Riemen über Umlenkscheiben geführt ist, die an den äußeren Enden der Traversenschenkel (868A, 868B) gelagert sind.

8. Vorrichtung nach einem der Ansprüche 4 bis 7, **dadurch gekennzeichnet**, **daß** die Umformeinrichtung (42) einen Förderspalt (82; 382; US1, US2) zwischen zwei relativ zueinander bewegten Oberflächen (84, 86) hat, dessen Breite (F) der Länge des zu erzeugenden Teigstrangs (62) entspricht und der so profiliert ist, daß der im Förderspalt (82; 382; US1, US2) auf Endabmessungen ausgewalkte, rotationssymmetrische Teigstrang einen vorbestimmten Sollquerschnitt ausfüllt, wobei vorzugsweise
die beiden Oberflächen gegensinnig und mit unterschiedlicher Geschwindigkeit angetrieben sind und/oder vorzugsweise
die Oberflächen von Segment-Förderbändern (90, 92; 990, 992, 993) gebildet sind, in deren aufeinander zu weisenden Segmenten (94; 994) der zu erzeugenden Form entsprechend und komplementär gestaltete Vertiefungen (104) ausgebildet sind, wobei vorzugsweise die Segmente (94; 994) der beiden Segment-Förderbänder (90, 92; 990, 992, 993) identisch, vorzugsweise leistenartig gestaltet sind.

9. Vorrichtung nach Anspruch 8, **dadurch gekennzeichnet**, **daß** die Segmente (94; 994) des Segment-Förderbandes (90, 92; 990, 992, 993) im Bereich der Förder- und Umformstrecke (UFS; US1, US2) mit ihren aufeinander zu weisenden Flächen (108, 110; 944, 946) profilartig ineinandergreifen, wobei vorzugsweise
die Segment-Förderbänder (290, 292; 990, 992, 993) zwischen sich einen Einlaufspalt (114) bilden, dessen Länge (LE) vorzugsweise einstellbar ist und/oder
die Segmente (94) auswechselbar über Laschen an Förderketten (96) sitzen, wobei
die Segmente (94; 994) vorzugsweise aus Stahl, Kunststoff oder Aluminium bestehen, und gegebenenfalls
das obenliegende Segment-Förderband gegenüber dem unteren etwas verkürzt ist.

10. Vorrichtung nach Anspruch 8 oder 9, **dadurch gekennzeichnet**, **daß** in die Lamellen bzw. Segmente (994) schräg nach außen verlufende Vertiefungen (940) eingearbeitet oder eingeformt sind, mittels derer der Teigstrang gesteuert in die Länge ziehbar ist, wobei vorzugsweise
die Segmente (994) im Geradeauslauf eine durchgehende Fläche (942) ausbilden und/oder
den Segmenten (994) rand- und/oder innenseitig eine Abstützung zugeordnet ist, mit der an ausgewählten Zonen des Förderspalts der auf den Teig ausgeübte Druck variierbar und einstellbar ist.

11. Vorrichtung nach einem der Ansprüche 8 bis 10, **dadurch gekennzeichnet**, **daß** sich das entgegen der Durchlaufrichtung bewegende Förderband (992) mit einer Geschwindigkeit bewegt, die einen Bruchteil, vorzugsweise 1/5 bis 1/9, vorzugsweise 1/7 der Bewegungsgeschwindigkeit des in Durchlaufrichtung angetriebenen Bandes ausmacht, wobei vorzugsweise
drei übereinander liegende, vorzugsweise in Längsrichtung zueinander versetzte Segment-Förderbänder (990, 992, 993) vorgesehen sind, so daß zwei Durchlauf- und Umformstrecken (US1, US2) gebildet sind, die hintereinander liegen und/oder vorzugsweise
der Vertikalabstand (AV) der Segment-Förderbänder vorzugsweise in Abhängigkeit von den Ausgangssignalen einer die Abmessungen des fertig geformten Teigstrangs vermessenden Vorrichtung (960) einstellbar ist.

12. Vorrichtung nach Anspruch 7, **dadurch gekennzeichnet**, **daß** zumindest eine der Oberflächen von einem Förderband (390; 392) aus textilem oder Kunststoffmaterial gebildet ist, das sich auf einer profilierten Stützfläche (116, 118) abstützt, die sich über die ganze Länge der Umform- und Förderstrecke (UFS) erstreckt, wobei vorzugsweise
dem Förderband (390, 392) entsprechend profilierte Umlenkwalzen (398) zugeordnet sind und/oder vorzugsweise
die aufeinander zu weisenden Oberflächen im Bereich des Umform- und Förderspalts der zu erzeugenden Form entsprechende und ggfs.komplementär gestaltete Vertiefungen (304) aufweisen, und/oder
zwei gegensinnig und mit unterschiedlichen Geschwindigkeiten angetriebene Förderbänder (390, 392) vorgesehen sind.

13. Vorrichtung nach einem der Ansprüche 7 bis 12, **dadurch gekennzeichnet**, **daß** zwischen den relativ zueinander bewegten Oberflächen (84, 86; 116, 118) randseitig ein den Spalt seitlich begrenzender Gleitstreifen (320) vorgesehen ist.

14. Vorrichtung nach einem der Ansprüche 4 bis 13, **dadurch gekennzeichnet**, **daß** die Greifer (66) Zangenkörper (128; 528) aufweisen, die im geöffneten Zustand von oben über die Enden (62E) des Teigstrangs (62) fahrbar sind, wobei vorzugsweise
am Austritt (88) der Teigling-Umformeinrichtung (42) eine Auffangmulde (46; 446) für den Teigstrang (62) vorgesehen ist, die zumindest im Randbereich für den Durchtritt der Zangenkörper durchbrochen (138) ist, und/oder vorzugsweise
der Zangenkörper mehrere parallel zueinander angeordnete Zangenzinken (128; 528) aufweist.

15. Vorrichtung nach einem der Ansprüche 8 bis 14, **gekennzeichnet durch** eine Vorrichtung zur Feinausrichtung eines in vorbestimmte Querschnitts- und/oder Längenabmessungen umgeformten, länglichen Teig-Rohlings, der quer zu einer Transportrichtung ausgerichtet die Teig-Umformeinrichtung (990, 992, 993) verläßt, wobei ein am Auslauf der Teig-Umformeinrichtung (990, 992, 993) angeordnetes Auffangrad (962), dessen Achse (964) im wesentlichen parallel zur Transportrichtung ausgerichtet ist und dem im wesentlichen tangential und symmetrisch zu einer Vertikalebene an den Umfang des Auffangrades anschließende Auffangrinnen (966, 968) für den beim Transport auf das Auffangrad (962) fallenden Teigstrang zugeordnet sind, wobei im Bereich der dem Auffangrad (962) abgewandten Enden der Auffangrinnen (966, 968) jeweils ein Sensor (972, 974) angeordnet ist, über dessen Ausgangssignale und vorzugsweise unter Zuhilfenahme einer Meß- oder Zähleinrichtung das Auffangrad (962) so lange drehbar ist, bis der Teigstrang ausgemittelt vom Auffangrad (962) abgestützt ist.

## Claims

1. Process for the mechanical production of pretzels from a portion of dough, wherein:
the portion of dough is shaped into a string of dough (62) having predetermined dimensions,
the string of dough (62) subsequently is grasped by its ends by a pair of grippers (66R, 66L) and knotted into a pretzel shape on a support while executing a translatory and rotatory 360° relative movement between said pair of grippers (66R, 66L) and said support (48R, 48L), with an axis essentially perpendicular to said support;
said grippers (66R, 66L) press the ends of the string of dough onto the center piece (62M) of the pretzel; and
the completely knotted pretzel is passed from said support (48R, 48L) to a transport belt (32, 34), with the string of dough (62) having a controlled length (F) and orientation being passed on to said pair of grippers (66R, 66L);
said grippers (66R, 66L) initially draw the grasped string of dough into a loop shape in a continuous process of motions along a movement curve (K1) which is symmetrical with the plane of symmetry of the pretzel and the ends (62E) of the string of dough is located above the "heart" of the pretzel to be knotted, characterized in that, the center piece (62M) of the loop is supported preferably positively on said support (48R, 48L) or on an arcuate mounting element (50) corresponding to the shape of the completed pretzel;
and after said grippers (66) come to a standstill above the "heart" of the pretzel, they carry out the 360°-rotational movement and are subsequently moved synchronously downwards and apart along the shortest path of a movement curve (K2) until they are positioned above the intended points of pressure contact for the ends of the string of dough on the center piece;
said grippers (66) release the string of dough and pressure-contact the ends (62E) of the string of dough by means of a consecutive lifting and lowering movement, whereupon said grippers are moved on into the home position for renewed receiving of the following string of dough, while simultaneously
the completely shaped, raw pretzel (80) is conveyed in free fall in parallel translation onto a conveying means (32, 34) located underneath by short-time opening of articulatedly mounted wings (48R, 48L) of said support (48).

2. Method according to claim 1, **characterized in that** the string of dough is supplied to the knotting station (44) transversely to the passing direction (D) of a baking support (32; 632), and that the raw pretzels (80) coming from said knotting station are buffered in a line the orientation of which is perpendicular to the passing direction (D) of said baking support and the length (L) of which essentially corresponds to the width of said baking support (32; 632), and that the line of completely knotted raw pretzels is continued until a buffer support (60) receiving the line and consisting of two pivotably supported wings (60R, 60L) is completely filled, whereupon all of the raw pretzels (80) on it are simultaneously deposited on said baking support (32; 632) underneath it which is then conveyed on by a further cycle or timing, respectively, said baking support (32; 632) having the form of a transport belt (632) passing through a baking line consecutively comprising fermenting, conditioning, cooling, lye treatment, salting, and baking zones.

3. Method according to claim 1 or 2, **characterized in that**, in order to produce the string of dough, a portion of dough is charged into a conveying gap (82) the width (F) of which corresponds to the length of the string of dough to be produced, and that the piece of dough is subjected to stretching and kneading processing while passing through the conveying and shaping section (UFS) between the surfaces (84, 86) moved in relation to each other, until it has reached the lateral limitation of said conveying gap.

4. Device for implementing the method according to one of claims 1 to 3, comprising
means (42) for shaping a portion of dough into a string of dough (62) having predetermined dimensions,
a pretzel knotting station (44) wherein the string of dough (62) is grasped by its ends by a pair of grippers (66R, 66L) and knotted into a pretzel shape on a support (48) while executing a translatory and rotatory 360° relative movement between said pair of grippers and said support, with an axis essentially perpendicular to the support, whereupon said grippers (66) press the ends of the string of dough onto the center piece of the pretzel; and
means for transferring the completely knotted pretzel from said support onto a transport belt, **characterized in that**
said means (42) for shaping the portion of dough into a string of dough is adapted to said knotting device (44) such that the string of dough (62) at the exit from the shaping means opposes a pair of grippers (66R, 66L) in exact alignment,
said pair of grippers is suspended on a transverse member (68) positioned above the shaping means (42) translatable along it and drivably in opposite directions,
with said transverse member (68) comprising a separate rotational (PHI) and lifting drive (74, Y axis) and being carried together with the latter by a retaining head (74) associated with a linear drive (Z) having an axis which is perpendicular to the vertical plane containing the string of dough; that
said support (48) for the raw pretzel (80) is positioned slightly below the exit from said shaping means (42) and formed such that the string of dough grasped by said grippers (66) is supportable at least at its central portion (62M) on said support (48) or on an arcuate mounting element (50) corresponding to the finished pretzel shape by frictional force or positively, and the completely knotted raw pretzel (80) is conveyable in parallel translation during short-time opening of articulatedly mounted wings (48R, 48L) of said support in free fall onto a transport device (32; 632) arranged underneath, and that
a movement control is provided with which the movements of said grippers (66) and of said transverse member (68) may be initiated simultaneously and preferably independently of each other,
with preferably said transport device in the dough shaping means (42) being essentially perpendicular to the passing direction (D) of a baking support (32; 632), and that the transport means (32; 632) is preceded by an intermediate storage support (60) the orientation of which is perpendicular to the passing direction (D) of said baking support, and the length (L) of which essentially corresponds to the width (B) of said baking support (32; 632).

5. Device according to claim 4, **characterized in that** said knotting support (48R, 48L) and/or said intermediate storage support (60) comprise a timed drive whereby the completely knotted raw pretzels (80) are consecutively conveyable into a position which is laterally offset relative to the previously deposited pretzel before the support wings (48R, 48L) are opened, and in that stepwise offsetting is carried out until said intermediate storage support (60) is completely filled, with preferably
said baking support (32; 632) being associated with a stepping drive (34) whereby after the process of simultaneously depositing the raw pretzels said baking support is conveyed on by one timing from said intermediate storage support (60) and/or
the individual wings (60R, 60L) of said intermediate storage support (60) each comprise a pivoting axis parallel with the axis (Z) of the retaining head linear drive and positioned on the lateral edges facing away from each other, and/or
said support (48) for the raw pretzel is provided at least in certain areas with a depression (50) representing the intended shape of the raw pretzel.

6. Device according to claim 4 or 5, **characterized in that** the rotational drive (70; PHI) for the gripper transverse member (68) is associated with a reversing device whereby the sense of rotation of the 360° rotation may be reversed alternately, with preferably
the drives for said retaining head (72) and/or said transverse member (68) and/or said grippers (66) working pneumatically, electrically or hydraulically, and/or
a stepping motor drive being provided, wherein preferably
said baking support is formed by a conveyor belt (632) which, preferably in a timed manner, passes through a baking line consecutively comprising fermenting, climate, cooling, lye treatment, salting, and baking zones, or
said baking support is formed by a baking tray (32) associated with a timed forward feed (34).

7. Device according to one of claims 4 to 6, **characterized in that** said transverse member (768; 868) is carried by a vertical slide (774; 874) which is located translatably or shiftably on a horizontally movable carrier head (772; 872) on which two drive motors (M1, M2) are mounted whereby the respective horizontal and vertical movements of the transverse member may be initiated, with preferably
said vertical slide (874) on its inside receiving a vertically arranged hollow shaft (812) through which the rotational drive movement (PHI) of the transverse member (868) may be initiated and inside which an internal shaft (818) is arranged by which the driving force for inverse or opposite movement of the grippers (866) into the plane of the transverse member (868) may be transmitted, and/or
drive of the vertical slide (874) and of the carrier head (872) is effected by means of a rack (865) which is in mesh with pertinent drive pinions (804, 808) of the drive motors (M1, M2), and/or
for inverse movement of said grippers (766; 866), i.e. for movement in opposite directions a belt drive (836, 820) is provided the drive gear (820) of which is situated in the rotational axis (819) of the transverse member (868) and the belt of which is guided over deflection disks mounted on the outer ends of the legs (868A, 868B) of sad transverse member.

8. Device according to one of claims 4 to 7, **characterized in that** said shaping means (42) comprises a conveying gap (82; 382; US1, US2) between two surfaces (84, 86) moved in relation to each other, the width (F) of which corresponds to the length of the string of dough (62) to be produced and which is profiled such that the rotationally symmetrical string of dough which is kneaded to final dimensions inside the conveying gap (82; 382; US1, US2) fills a predetermined desired cross-section, with preferably said two surfaces being driven inversely and at different velocities and/or preferably
the surfaces being formed by segmented conveyor belts (90, 92; 990, 992, 993) in the mutually facing segments (94; 994) of which depressions (104) are formed complementarily corresponding to the shape to be produced, wherein preferably the segments (94; 994) of the two segmented conveyor belts (90, 92; 990, 992; 993) are shaped identically.

9. Device according to claim 8, **characterized in that** the mutually facing surfaces (108, 110; 944, 946) of the segments (94; 994) of the segmented conveyor belt (90, 92; 990, 992, 993) mesh in the manner of a profile in the area of the conveying and shaping section (UFS; US1, US2), with preferably
the segmented conveyor belts (290, 292; 990, 992, 993) between each other forming an introductory gap (114) the length (LE) of which is preferably adjustable and/or
said segments (94) exchangeably being seated on conveying chains (96) via chain links, wherein
said segments (94; 994) are of steel, synthetic material, or aluminum, and in a given case
the upper segmented conveyor belt is somewhat shortened as compared with the lower one.

10. Device according to claim 8 or 9, **characterized in that** depressions (940) are worked or shaped into the panels or segments (994) obliquely towards the outside, whereby the string of dough may be drawn longitudinally in a controlled manner, with preferably
said segments (994) forming a continuous surface (942) during linear movement and/or
said segments (994) on the side of their edge and/or on their inside being associated with a support whereby in selected zones of the conveying gap the pressure exerted on the dough is variable and adjustable.

11. Device according to one of claims 8 to 10, **characterized in that** the conveyor belt (992) moving opposite to the production direction moves at a velocity amounting to a fraction, preferably one fifth to one ninth, preferably one seventh of the advancing velocity of the belt driven in production direction, with preferably
three superposed segmented conveyor belts (990, 992, 993) being provided preferably offset in the longitudinal direction, such that two passing and shaping sections (US1, US2) are formed behind one another, and/or preferably
the vertical distance (AV) of the segmented conveyor belts being adjustable preferably depending on the output signals of a device (960) measuring the dimensions of the completely shaped string of dough.

12. Device according to claim 7, **characterized in that** at least one of the surfaces is formed by a conveyor belt (390; 392) of textile or synthetic material which is supported on a profiled support surface (116, 118) extending over the entire length of the shaping and conveying section (UFS), with preferably
the conveyor belt (390, 392) being associated with correspondingly profiled deflection rollers (398) and/or preferably
the mutually facing surfaces in the area of the shaping and conveying gap comprise depressions (304) corresponding to the shape to be produced and, in a given case, shaped complementarily, and/or
two conveyor belts (390, 392) being provided to be driven inversely and at different velocities.

13. Device according to one of claims 7 to 12, **characterized in that** between the surfaces (84, 86; 116, 118) moved relatively to each other a sliding strip (320) laterally delimiting the gap on the side of the edge is provided.

14. Device according to one of claims 4 to 13, **characterized in that** said grippers (66) comprise tong bodies (128; 528) which, then opened, are movable over the ends (62E) of the string of dough (62) from above, with preferably
at the exit (88) from the dough shaping means (42) a receiving depression (46; 446) for the string of dough (62) being provided, which is perforated at least in the edge area for passage of the tong bodies (138), and/or preferably
said tong body comprising several tong prongs (128; 528) in parallel arrangement.

15. Device according to one of claims 8 to 14, **characterized by** a device for fine adjustment of an elongated piece of dough shaped into predetermined cross-sectional and/or longitudinal dimensions, which leaves a dough shaping means (990, 992, 993) transversely to a production direction, with a receiving wheel (962) arranged at the exit of said dough shaping means (990, 992, 993), the axis (964) of which is arranged or aligned essentially in parallel with the transport direction and which is associated with receiving troughs (966, 968) arranged such as to continue essentially tangentially and symmetrically with a vertical plane the circumference of the receiving wheel, for the string of dough falling onto the receiving wheel (62) during transport, with one sensor (972, 974) each being arranged in the area of the ends of the receiving troughs (966, 968) facing away from the receiving wheel (962), by the output signals of which and preferably by utilizing a measuring or counting device the receiving wheel (962) is rotatable until the string of dough is supported centrally by the receiving wheel (962).

## Revendications

1. Procédé de fabrication mécanique de bretzels à partir d'une portion de pâte, dans lequel :
la portion de pâte est constituée en un boudin de pâte (62) ayant des dimensions prédéterminées,
le boudin de pâte (62) est ensuite appréhendé aux extrémités par une paire de préhenseurs (66R, 66L) et est entortillé sur une embase en réalisant un déplacement relatif en translation et en rotation sur 360° entre la paire de préhenseurs (66R, 66L) et l'embase (48R, 48L), pour donner une forme de bretzel, avec un axe vertical, sensiblement perpendiculaire à celui de l'embase;
les préhenseurs (66R, 66L) pressant les extrémités du boudin de pâte (62) sur la partie médiane (62M) du bretzel; et
le bretzel dont l'enlacement est achevé est transféré de l'embase (48R, 48L) à une bande transporteuse (32, 34), le boudin de pâte (62) étant transféré, sa longueur (F) et son orientation ayant été contrôlées, à la paire de préhenseurs (66R, 66L);
les préhenseurs (66R, 66L) tirant d'abord le boudin de pâte saisi en suivant un déroulement cinématique, continu et répondant à une symétrie par rapport au plan de symétrie du bretzel, le long d'une courbe de déplacement (K1), d'abord en forme de boucle et positionnant les extrémités (62E) du boudin de pâte sur le "coeur" du bretzel à entortiller, caractérisé en ce que la pièce médiane (62M) de la boucle prend appui de préférence avec ajustement de forme sur l'embase (48R, 48L) ou une partie de fixation (50) arquée correspondant à la forme terminée du bretzel;
et, après arrêt des préhenseurs (66) au-dessus du coeur du bretzel, ceux-ci exécutant le mouvement de rotation à 360°, puis les préhenseurs étant déplacés sur le trajet le plus court le long d'une courbe de déplacement (K2) et de façon synchrone vers le base et écartés les uns des autres, jusqu'à venir se placer sur les points de pressage théoriques des extrémités de boudin de pâte sur la pièce médiane;
les préhenseurs (66) libérant le boudin de pâte et pressant, au moyen d'un mouvement de levée et de descente subséquent les extrémités de boudin de pâte (62E), suite à quoi les préhenseurs continuent leur déplacement dans la position initiale pour, de nouveau, recevoir le boudin de pâte subséquent, tandis que, simultanément,
le bretzel brut (80) dont le formage est terminé est transporte, parallèlement à lui-même, avec une brève ouverture par rabattement d'ailettes (48R, 48R) montées articulées appartenant à l'embase (48), en tombant en chute libre sur un dispositif de transport (32, 34) placé au-dessous.

2. Procédé selon la revendication 1, caractérisé en ce que le boudin de pâte est amené au poste d'entortillement (44) transversalement par rapport à la direction de passage (D) d'une embase de cuisson (32; 632) et en ce que l'ébauche de bretzels (80) venant du poste d'entortillement est placée en stockage intermédiaire, en rangées, son orientation étant perpendiculaire à la direction de passage (D) de l'embase de cuisson et sa longueur (L) correspondant sensiblement à la largeur (B) de l'embase de cuisson (32; 632), et en ce que la rangée des ébauches de bretzels dont l'entortillement est ainsi terminé est d'une longueur allant jusqu'à ce qu'une embase tampon (60) recevant la rangée constituée de deux ailes (60R, 60L) montées pivotantes, soit complètement garnie, suite à quoi toutes les ébauches (80) se trouvant dessus sont déposées simultanément sur l'embase de cuisson (32; 632) se trouvant au-dessous, embase dont le transport est continué ensuite de la valeur d'un pas opératoire, de préférence l'embase de cuisson ayant la forme d'une bande transporteuse (632), qui passe sur une chaîne de cuisson dans laquelle sont montées, les unes après les autres, une zone de fermentation, de climatisation, de refroidissement, de lessivage et de salage, ainsi que de cuisson.

3. Procédé selon la revendication 1 ou 2, caractérisé en ce que, pour préparer le boudin de pâte, on introduit une portion d'ébauche de pâte dans un interstice de transport (82) dont la largeur (F) correspondant à la longueur du boudin de pâte à produire et en ce que, lors du passage dans la veine de transport et de formage (UPS) entre des surfaces (84, 86) déplacées l'une par rapport à l'autre, l'ébauche de pâte est soumise à une sollicitation en étirage et en foulage, jusqu'à ce que la limitation latérale de l'interstice de transport ait été atteinte.

4. Dispositif de mise en oeuvre du procédé selon l'une des revendications 1 à 3, avec
un dispositif (42) destiné à façonner une portion de pâte pour donner un boudin de pâte (62) de dimensions prédéterminées,
un dispositif d'entortillement de bretzels (44), dans lequel le boudin de pâte (62) est saisi aux extrémités par une paire de préhenseurs (66R, 66L) et est entortillé sur une base (48) en effectuant un mouvement relatif en translation et en rotation sur 360° entre la paire de préhenseurs et l'embase avec un axe vertical, sensiblement perpendiculaire à l'embase, pour donner une forme en bretzel, à la suite de quoi les préhenseurs (66) pressent les extrémités du boudin de pâte sur la partie médiane du bretzel; et
un dispositif de transfert destiné au bretzel dont l'entortillement est terminé, assurant le transfert de l'embase à une bande transporteuse, caractérisé en ce que
le dispositif (42) destiné à façonner la portion de pâte en donnant un boudin de pâte est adapté au dispositif d'entortillement (44), de manière que le boudin de pâte (62) viennent à la sortie du dispositif de façonnage se placer exactement en face et en alignement par ses extrémités avec une paire de préhenseurs (66R, 66L),
les préhenseurs étant accrochés sur une traverse (68) positionnée au-dessus du dispositif de façonnage (42), en pouvant être déplacés le long de cette traverse et en étant accrochés avec possibilité d'entraînement en sens inverse,
la traverse (68) ayant un entraînement de rotation (φ) et de levée (74, axe Y) séparés et étant portée conjointement avec ce dernier entraînement par une tête support (74) à laquelle est associé un entraînement linéaire (Z) qui a un axe montant perpendiculairement dans le plan vertical contenant le boudin de pâte; en ce que
l'embase (48) destinée à l'ébauche de bretzel (80) est située légèrement au-dessous de la sortie du dispositif de façonnage (42) et est réalisée de manière à ce que le boudin de pâte appréhendé par les préhenseurs (66) puisse prendre appui, au moins par sa partie médiane (62M), avec ajustement mécanique ou ajustement de forme, sur l'embase (48) respectivement sur une partie de fixation (50) arquée dont la forme correspond à celle du bretzel terminé et l'ébauche de bretzel (80) dont l'entortillement est terminé est susceptible d'être transportée parallèlement à elle-même, avec une brève ouverture par rabattement, par des ailettes (48R, 48L) montées articulées de l'embase, en tombant en chute libre sur un dispositif de transport (32; 632) placé dessous, et en ce que
il est prévu un dispositif de déplacement à l'aide duquel les déplacements des préhenseurs (66) et de la traverse (68) peuvent être introduits de façon simultanée et de préférence indépendamment l'un de l'autre, où, de préférence
le dispositif de transport prévu dans le dispositif de façonnage d'ébauche de pâte (42) est placé sensiblement perpendiculairement sur la direction de passage (D) d'une embase de cuisson (32; 632), et en amont du dispositif de transport (32; 632) est placée une embase de stockage intermédiaire (60) dont l'orientation est perpendiculaire à la direction du passage (D) de l'embase de cuisson et dont la largeur (L) correspond sensiblement à la largeur (B) de l'embase de cuisson (32; 632).

5. Dispositif selon la revendication 4, caractérisé en ce que l'embase d'entortillement (48R, 48L) et/ou l'embase de stockage intermédiaire (60) ont un entraînement cadencé à l'aide duquel les ébauches de bretzels (80) dont l'entortillement est terminé peuvent être placées successivement en une position décalée latéralement par rapport à celle du bretzel déposé, avant que les ailettes d'embase (48R, 48L) soient ouvertes par rabattement, et en ce que le décalage pas-à-pas dure jusqu'à ce que l'embase de stockage intermédiaire (60) soit complètement garnie, où, de préférence,
à l'embase de cuisson (32; 632) est associé un entraînement en pas de pèlerin (34) à l'aide duquel l'embase de cuisson peut continuer son transport de la valeur d'un pas après la procédure de dépose simultanée des ébauches de bretzels par l'embase de stockage intermédiaire (60) et/ou
les ailes (60R, 60L) individuelles de l'embase de stockage intermédiaire (60) ayant chacune un axe de pivotement orienté parallèlement par rapport à l'axe (Z) de l'entraînement linéaire de la tête de maintien et disposé sur les bords latéraux mutuellement opposés, et/ou
une cavité (50), reproduisant au moins par zones la forme théorique de l'ébauche de bretzel, étant ménagée dans l'embase (48) destinée à l'ébauche de bretzel.

6. Dispositif selon la revendication 4 ou 5, caractérisé en ce qu'est associé à l'entraînement de rotation (70; φ) destiné à la traverse de préhenseur (68) un dispositif d'inversion de commande, à l'aide duquel le sens de rotation du déplacement tournant de 360° peut être inversé de façon alternée, où, de préférence, les entraînements de la tête de maintien (72) et/ou de la traverse (68) et/ou des préhenseurs (66) fonctionnent de façon pneumatique, électrique ou hydraulique, et/ou
un entraînement actionné par un moteur pas-à-pas étant prévu, et/ou
l'embase de cuisson étant passée soit par une bande transporteuse (632), soumise de préférence à un mouvement cadencé, dans une chaîne de cuisson où sont mises en circuit les unes derrière les autres des zones de fermentation, climatisation, refroidissement, lessivage et salage, ainsi que des zones de cuisson, où est constituée par une tôle de cuisson (32) à laquelle est associé un élément moteur (34) cadencé.

7. Dispositif selon l'une des revendications 4 à 6, caractérisé en ce que la traverse (768; 868) est portée par un chariot vertical (774; 874) qui est placé déplaçable sur une tête support (772; 872) déplaçable horizontalement à laquelle sont fixés deux moteurs d'entraînement (M1, M2), au moyen desquels les déplacements horizontaux et verticaux de la traverse peuvent être introduits, où, de préférence,
le chariot vertical (874) reçoit intérieurement un arbre creux (812) s'étendant verticalement, par l'intermédiaire duquel le mouvement d'entraînement de rotation (φ) de la traverse (868) peut être introduit et dans lequel passe un arbre intérieur (818) à l'aide duquel la force d'entraînement destinée au déplacement en sens inverse des préhenseurs (866) dans le plan de la traverse (868) est susceptible d'être transmise, et/ou
l'entraînement du chariot vertical (874) et de la tête de support (872) s'effectuant au moyen d'une crémaillère (865) s'engrenant avec des pignons d'entraînement (804, 808) afférents des moteurs d'entraînement (M1, M2), et/ou, pour obtenir le déplacement en sens inverse des préhenseurs (766; 866), est prévu un entraînement à courroie (836, 820), dont la roue d'entraînement (820) est placée dans l'axe de rotation (819) de la traverse (868) et sa courroie étant guidée sur des poulies de renvoi, tourillonnant sur les extrémités extérieures des branches de traverse (868A, 868B).

8. Dispositif selon l'une des revendications 4 à 7, caractérisé en ce que le dispositif de façonnage (42) comporte un interstice de transport (82; 382; US1, US2) entre deux surfaces (84, 86) déplacées relativement l'une par rapport à l'autre, dont la largeur (F) correspond à la longueur du boudin de pâte (62) à produire et qui est profilé de manière que le boudin de pâte, répondant à une symétrie de rotation et qui est amené aux dimensions finales par foulage dans l'interstice de transport (82; 382; US1, US2), remplit une section transversale théorique prédéterminée où, de préférence,
les deux surfaces sont entraînés en sens inverse et avec une vitesse différente, et/ou, de préférence,
les surfaces sont constituées par des bandes transporteuses à segments (90, 92; 980, 992, 993), où, dans les segments (94; 994) tournés les uns vers les autres de la forme à produire de ces bandes, sont réalisées des cavités (104) dont la forme correspond à la forme à produire et qui en est complémentaire, de préférence le segment (94; 994) des deux bandes transporteuses à segments (90, 92; 990, 992, 993) étant réalisé à l'identique, de préférence sous forme de bande.

9. Dispositif selon la revendication 8, caractérisé en ce que les segments (94; 994) de la bande transporteuse à segments (90, 92; 990, 992, 993) s'engagent les uns dans l s autres à la façon d'un profil dans la zone de la veine de transport et de façonnage (UFS; US1, US2), ceci se faisant par ses faces (108, 110; 944, 946) tournées les unes vers le autres, où, de préférence,
les bandes transporteuses à segments (290, 292; 990, 992, 993) constituant entre elles un interstice d'introduction (114) dont la longueur (LE) est de préférence réglable et/ou
les segments (94) étant placés de façon remplaçable, par l'intermédiaire d'attaches, sur des chaînes de transport (96), où
les segments (94; 994) sont de préférence constitués en acier, en matière plastique ou en aluminium, et le cas échéant
la bande transporteuse à segments placée en position supérieure étant quelque peu raccourcie par rapport à celle qui est placée en position inférieure.

10. Dispositif selon la revendication 8 ou 9, caractérisé en ce que dans les lamelles ou les segments (994) sont usinées ou creusées des cavités (940) s'étendant obliquement vers l'extérieur, cavités au moyen desquelles le boudin de pâte peut être étiré à la longueur d'une façon commandée, où, de préférence,
les segments (994) constituant dans leur tracé rectiligne une surface (942) continue et/ou
aux segments (994) sont associés en bordure et/ou intérieurement un appui à l'aide duquel sur des zones sélectionnées de l'interstice de transport la pression exercée sur la pâte peut être modifiée et réglée.

11. Dispositif selon l'une des revendications 8 à 10, caractérisé en ce que la bande transporteuse (992) se déplaçant dans le sens inverse du sens de passage se déplace à une vitesse qui est une fraction, de préférence de 1/5 à 1/9, de préférence de 1/7 de la vitesse de déplacement de la bande entraînée dans la direction de passage, où, de préférence,
trois bandes transporteuses à segments (990, 992, 993) placées les unes au-dessus des autres, décalées de préférence les unes par rapport aux autres en direction longitudinale sont prévues, de sorte que sont constituées deux veines de passage et de façonnage (US1, US2), placées l'une derrière l'autre et/ou, de préférence,
l'espacement vertical (AV) entre les bandes transporteuses à segments étant, de préférence, réglable en fonction des signaux de sortie d'un dispositif (960) mesurant les espacements entre les boudins de pâte dont le façonnage est achevé.

12. Dispositif selon la revendication 7, caractérisé en ce qu'au moins l'une des surfaces d'une bande transporteuse (390; 392) est constituée par un matériau textile ou synthétique, prenant appui sur une surface d'appui (116, 118) profilée s'étendant sur toute la longueur de la veine de formage et de transport (UFS), où, de préférence,
à la bande transporteuse (390, 392) sont associés des rouleaux de renvoi (398) de profil correspondant et/ou de préférence
les surfaces tournées l'une vers l'autre présentant dans la zone de l'interstice de façonnage et de transport des cavités (306) de forme correspondant à la forme à produire et le cas échéant complémentaire, et/ou
deux bandes transporteuses (390, 392) entraînées en sens inverse et à des vitesses différentes étant prévues.

13. Dispositif selon l'une des revendications 7 à 12, caractérisé en ce qu'entre les surfaces (84, 86; 116, 118) déplacées l'une par rapport à l'autre est prévue en bordure une bande de glissement (320) délimitant latéralement l'interstice.

14. Dispositif selon l'une des revendications 4 à 13, caractérisé en ce que les préhenseurs (66) présentent des corps de pince (128; 528) déplaçables à l'état ouvert depuis le dessus sur les extrémités (62E) du boudin de pâte (62), où, de préférence,
à la sortie (88) de dispositif de façonnage d'ébauche de pâte (42) est prévue une auge de captage (46; 446) pour le boudin de pâte (62), interrompue (en 138) au moins dans la zone de la bordure pour permettre le passage des corps de pince, et/ou de préférence
le corps de pince présentant plusieurs dents de pince (128; 528) disposées parallèlement les unes aux autres.

15. Dispositif selon l'une des revendications 8 à 14, caractérisé en ce par un dispositif d'orientation fine d'une ébauche de pâte allongée façonnée pour obtenir une section transversale et/ou une longueur prédéterminée, cette ébauche quittant le dispositif de façonnage de pâte (990, 992, 993) en étant orientée transversalement par rapport à une direction de transport, une roue de captage (962) étant disposée à la sortie du dispositif de façonnage de pâte (990, 992, 993), roue dont l'axe (964) est orienté sensiblement parallèlement à la direction de transport, et à laquelle sont associées des goulottes de captage (966, 968), placées sensiblement tangentiellement et se raccordant symétriquement à un plan vertical sur la périphérie de la roue de captage, pour le boudin de pâte tombant sur la roue de captage (962) lors du transport, un capteur (972, 974) étant disposé dans la zone de chacune des extrémités, opposées à la roue de captage (962), des goulottes de captage (966, 968), capteurs par l'intermédiaire des signaux de sortie desquels et, de préférence, avec l'aide d'un dispositif de mesure ou de comptage, la roue de captage (962) peut être tournée jusqu'à ce que le boudin de pâte soit soutenu de façon excentrée par la roue de captage (962).
